# EUROPEAN PATENT APPLICATION

(11) **EP 4 694 269 A1**
(43) Date of publication of application: **11.02.2026**
(21) Application number: 24778985.2
(22) Date of filing: 28.02.2024
(51) Int. Cl.: H04W 16/26, H04W 4/40, H04W 76/10, H04W 88/04

(54) **WIRELESS COMMUNICATION DEVICE, COMMUNICATION METHOD, AND INFORMATION PROCESSING DEVICE**

(30) Priority: 27.03.2023 JP 2023049747
(71) Applicant: Sony Group Corporation, Tokyo 108-0075 (JP)
(72) Inventor: UCHIYAMA, Hiromasa, Tokyo 108-0075 (JP); OTSUKI, Hiroto, Tokyo 108-0075 (JP); TSUDA, Shinichiro, Tokyo 108-0075 (JP)
(74) Representative: Witte, Weller & Partner Patentanwälte mbB
(86) International application number: PCT/JP2024/007199
(87) International publication number: WO 2024/202845

(57) **Abstract**

A wireless communication device of the present disclosure provides a second wireless access link with another wireless communication, on the basis of a first wireless access link with a base station. The wireless communication device includes one or a plurality of network interfaces, a user interface of the wireless communication device, provided for a user, and a processor. The processor transmits a registration request or a start request related to provision of the second wireless access link, to a server device managing the provision of the second wireless access link via one or a plurality of network interfaces. The processor receives a notification about the provision of the second wireless access link, from the server device. The processor outputs at least part of the notification to the user interface.

## Description

### Field

The present disclosure relates to a wireless communication device, a communication method, and an information processing device.

### Background

The first standard of the fifth generation mobile communication system, so-called 5G, was formulated in 2018 as Rel-15. In addition, services compatible with 5G was started in Japan in March 2020. Starting with the introduction of 5G communication networks, deployment of communication infrastructures is accelerating. In particular, introduction of millimeter wave band communication that makes it difficult to secure coverage requires the deployment of many communication infrastructures.

### Citation List

### Non Patent Literature

Non Patent Literature 1: SP-211636, "New SID on Study on Architecture Enhancements for Vehicle Mounted Relays," Electronic meeting, 3GPP TSG SA Meeting #SP-94E, December 2021. Internet <URL: https://www.3gpp.org/ftp/tsg_sa/TSG_SA/TSGS_94E_Electronic_ 2021_12/Docs/SP-211636.zip>

### Summary

### Technical Problem

For expansion of communication infrastructure, large investment cost is required. Therefore, infrastructure sharing has been accelerated recently. The infrastructure sharing enables suppression of the introduction cost of the communication infrastructure.

In this way, it is important to deploy the communication infrastructure at low cost in order to develop a next-generation network such as beyond 5G/6G.

Therefore, the present disclosure provides a mechanism that may deploy the communication infrastructure at low cost.

Note that the above problem or object is merely one of a plurality of problems or objects that a plurality of embodiments disclosed herein can solve or achieve. Solution to Problem

A wireless communication device of the present disclosure provides a second wireless access link with another wireless communication, on the basis of a first wireless access link with a base station. The wireless communication device includes one or a plurality of network interfaces, a user interface of the wireless communication device, provided for a user, and a processor. The processor transmits a registration request or a start request related to provision of the second wireless access link, to a server device managing the provision of the second wireless access link via one or a plurality of network interfaces. The processor receives a notification about the provision of the second wireless access link, from the server device. The processor outputs at least part of the notification to the user interface.

### Brief Description of Drawings

FIG. 1 is a diagram illustrating an overview of a communication system according to an embodiment of the present disclosure.
FIG. 2 is a diagram illustrating an example of a business model using a VaaNI service according to an embodiment of the present disclosure.
FIG. 3 is a diagram illustrating an example of a network architecture of the communication system according to an embodiment of the present disclosure.
FIG. 4 is a block diagram illustrating an exemplary configuration of an application server according to an embodiment of the present disclosure.
FIG. 5 is a diagram illustrating an exemplary configuration of a base station according to an embodiment of the present disclosure.
FIG. 6 is a diagram illustrating an exemplary configuration of a VaaNI terminal according to an embodiment of the present disclosure.
FIG. 7 is a diagram illustrating an exemplary configuration of an end user terminal according to an embodiment of the present disclosure.
FIG. 8 is a flowchart illustrating an exemplary procedure of a process for performing an operation of a VaaNI terminal according to an embodiment of the present disclosure.
FIG. 9 is a sequence diagram illustrating an exemplary procedure of a service registration process according to a first embodiment of the present disclosure.
FIG. 10 is a table illustrating an example of a vehicle DB according to the first embodiment of the present disclosure.
FIG. 11 is a sequence diagram illustrating an exemplary procedure of a service standby process according to the first embodiment of the present disclosure.
FIG. 12 is a table illustrating an example of a state management DB according to the first embodiment of the present disclosure.
FIG. 13 is a sequence diagram illustrating an exemplary procedure of a service implementation process according to the first embodiment of the present disclosure.
FIG. 14 is a sequence diagram illustrating another exemplary procedure of a service implementation process according to the first embodiment of the present disclosure.
FIG. 15 is a sequence diagram illustrating an exemplary procedure of a service implementation process according to a second embodiment of the present disclosure.
FIG. 16 is a diagram illustrating an example of a presentation screen according to the second embodiment of the present disclosure.
FIG. 17 is a diagram illustrating an example of a vehicle selection screen according to the second embodiment of the present disclosure.
FIG. 18 is a diagram illustrating another example of the presentation screen according to the second embodiment of the present disclosure.
FIG. 19 is a sequence diagram illustrating an exemplary procedure of a service implementation process according to a third embodiment of the present disclosure. Description of Embodiments

Embodiments of the present disclosure will be described in detail below with reference to the accompanying drawings. Note that in the present description and the drawings, component elements having substantially the same functional configurations are denoted by the same reference numerals, and description thereof will not be repeated.

In addition, in the present description and the drawings, similar component elements of the embodiments are distinguished by giving the same reference numerals followed by different alphabets or numerals in some cases. However, when there is no need to particularly distinguish the plurality of similar component elements, the component elements are denoted by the same reference numerals alone.

One or a plurality of embodiments (including examples, modifications, and application examples) described below can be implemented independently. Meanwhile, at least some of the plurality of embodiments described below may be implemented in combination with at least some of other embodiments as appropriate. The plurality of embodiments can include novel features different from each other. Therefore, the plurality of embodiments can contribute to solving different objects or problems, having different effects.

### <<1. Introduction>>

### <1.1. Operation scenario>

As described above, it is required to deploy communication infrastructures at low cost in order to deploy a next-generation network. For deployment of the communication infrastructures, a technology is known to, for example, extend coverage by using satellite communication or the like.

There is a method of directly providing communication from a satellite to a terminal device when extending the coverage by using the satellite communication or the like. In this method, a small device such as a smartphone may not keep the communication quality due to restrictions on power and communication capability.

In this case, deployment of a ground station near the terminal device, for satellite communication by the ground station, and for communication of a small terminal device such as a smartphone with the ground station, thereby ensuring the communication quality. However, in some cases, it may be difficult to install the ground station from the viewpoint of deployment cost and operation cost.

Therefore, in the present embodiment, a network infrastructure using the hardware performance of a car is introduced. For example, a communication system of the present embodiment uses the hardware performance and a feature of mobility of a general user's car or the like to operate the car as a relay station. As a result, the communication system provides richer wireless communication.

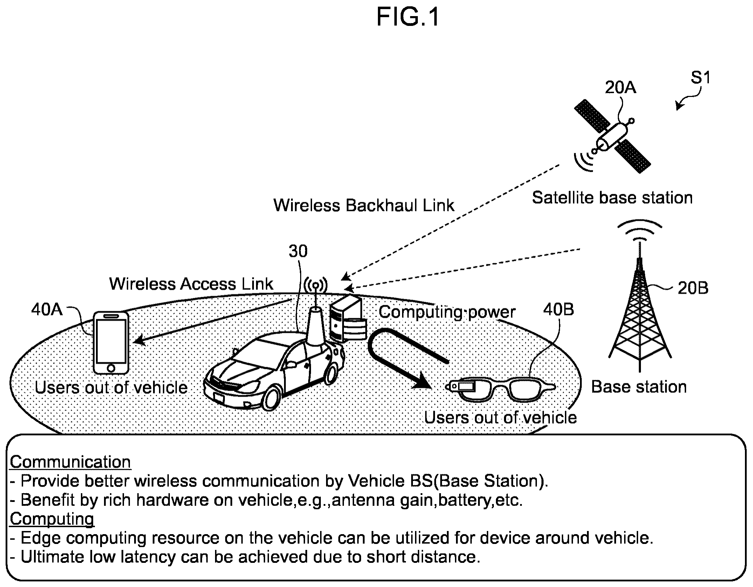

FIG. 1 is a diagram illustrating an overview of a communication system S1 according to an embodiment of the present disclosure. The communication system S1 illustrated in FIG. 1 includes a satellite base station 20A, a base station 20B, a car 30, and user equipments (UEs) 40A and 40B (terminal devices).

The car 30 provides a wireless access link between the UEs 40A and 40B, on the basis of a wireless backhaul link (an example of a first wireless access link) with the satellite base station 20A. The UEs 40A and 40B are terminal devices used by users different from a user of the car 30. Each of the UEs 40A and 40B may be a small device such as a smartphone of AR glasses.

In this way, the communication system S1 operates the car 30 as a relay station for the satellite base station 20A. With this configuration, the communication system S1 provides richer wireless communication for the UEs 40A and 40B.

Furthermore, the communication system S1 according to the present embodiment is not limited to the satellite communication, and may be applied to relay communication using the base station 20B generally used as well. Use of the communication system S1 according to the present embodiment also for the relay communication using the base station 20B generally used may provide a cell split gain, expanding the communication capacity of the entire network.

In addition to the wireless communication, the car 30 can be regarded as a device that may provide computing power. The car 30 is different from the small device such as a smartphone in terms of the size of housing. Therefore, it is considered that the car 30 can easily secure a space for accommodating a computing server.

Therefore, operating the car 30 as a dynamic edge computing server may provide an application (e.g., application executed on a UE 40) executed around the car 30, with the computing power, in addition to the wireless communication.

The communication system S1 applies to, for example, providing communication and computing capacity in an urban area. For example, the car (vehicle) 30 of the communication system S1 may be used to compensate for a coverage hole of the base station 20B.

The car 30 of the communication system S1 may further be used as an edge computing infrastructure to provide a computing resource to devices having low computing capacities (e.g., AR glasses, terminal devices, etc.). Even in a device having low computing capacity, such as AR glasses, use of the computing power of the car 30 enables low latency distributed processing, and it is possible to execute an application with a large processing amount, such as map display or a guide to a destination. Therefore, no processing in a cloud server via the wireless backhaul link with the satellite base station 20A is required, and a load on the wireless backhaul link can be reduced.

In addition, the communication system S1 applies to, for example, providing wireless communication in an area with insufficient infrastructures. Examples of the area with insufficient infrastructures include a rural area such as a mountain area and a developing country.

Note that, here, the number of cars 30 included in the communication system S1 is one, but the number of cars 30 included in the communication system S1 may be two or more. When providing the computing resource, the communication system S1 may use cooperation of edge computing servers locally mounted on a plurality of cars 30 to provide more powerful computing resources. In this way, the plurality of cars 30 may be cooperated with each other to provide the computing resources.

### <1.2. Definitions of terms>

The definitions of some of the terms used in the present disclosure will be described.

### (Car owner)

In the present disclosure, a "car owner" means an owner of a car. The car owner is not necessarily a driver of the car. The car owner may be an individual who owns the car, or may be a company that owns the car, such as a car rental company, a bus company, or a taxi company.

### (Driver)

In the present disclosure, a "driver" means a driver of a car. The driver is not necessarily an owner of the car. The driver is a person who drives a car regardless of whether the driver owns the car. The car owner described above may be the driver, or the car owner and the driver may be different.

### (Telecom operator)

In the present disclosure, a "telecom operator" is a provider who provides a wireless communication service. The telecom operator is not limited to a broadband operator (Public Land Mobile Network (PLMN), but also includes a private network operator in a local area. Furthermore, the telecom operator includes a satellite operator. The telecom operator can also include a ride-sharing company and a car rental agency. The telecom operator may be a mobile network operator (MNO).

### (End user)

In the present disclosure, an "end user" is a service beneficiary receiving a communication service or computing service and enjoying an application service. For example, the "end user" is a subscriber to a communication service of the telecom operator. In addition, the service beneficiary who receives a service using unlicensed band communication such as a wireless local area network (LAN) is also assumed as the "end user".

### (Car and vehicle)

In the present disclosure, the "car" or the "vehicle" is a device that provides the wireless access link and the computing power to the small device (end user terminal 40) such as a smartphone.

In one aspect, in the present disclosure, the "car" or the "vehicle" may operate as a user equipment (UE) or may operate as a base station. More specifically, when the wireless access link is an access link for cellular communication, the car 30 in the present disclosure can be a radio access network (RAN) node conforming to the 3GPP (registered trademark) standard. Specifically, the car 30 may be a relay node (including a donor node), an integrated access and backhaul (IAB) node (including an IAB donor node), or simply gNB. Furthermore or alternatively, the car 30 in the present disclosure may be device-to-device (D2D) UE (Network to UE relay, UE to UE relay).

When the wireless access link is an access link for Wi-Fi (registered trademark) (IEEE802.11) communication, the car 30 in the present disclosure may be a Wi-Fi (registered trademark) access point.

Furthermore, the car 30 in the present disclosure may have a computing resource. When the car 30 in the present disclosure functions as the RAN node conforming to the 3GPP (registered trademark) standard, an edge computing server (such as an edge application server) may be mounted on the car 30.

In this configuration, the computing resource may include a local user plane function (UPF) between the RAN and the edge computing server (local data network (DN)). Alternatively, the computing resource may further include at least one of 5GC (5G Core) nodes (e. g., access and mobility management function (AMF), session management function (SMF), and application function (AF)) as a node that manages the Local UPF.

In this way, the car 30 in the present disclosure may have the communication device and/or the computing resource (information processing device). Hereinafter, a configuration and operation of the car 30 which will be described below can be at least partially replaced with a configuration and operation of the communication device and/or the computing resource. In other words, the car 30 in the following description can be replaced with the communication device and/or the information processing device.

### (End user terminal)

In the present disclosure, the "end user terminal" is a terminal device used by the end user (service beneficiary). The end user terminal corresponds to the UE 40 described above. Hereinafter, the UE 40 is also referred to as the end user terminal 40.

The end user terminal 40 in the present disclosure performs wireless communication upon receiving a wireless access link provided from the car 30. Furthermore, the end user terminal 40 may receive the computing resource provided from the car to perform predetermined computing (computing for a desired application) by using the resources.

### (VaaNI (Vehicle as a Network Infrastructure) service)

In the present disclosure, a "VaaNI service" is a service that is provided to the end user by the communication system S1 via the car 30. The VaaNI service includes providing the wireless access link and/or the computing resource to the end user terminal 40 by the car 30. Hereinafter, the car 30 that provides the VaaNI service to the end user terminal 40 is also described as a VaaNI terminal 30.

Hereinafter, unless otherwise specified, an example of the VaaNI service provided while the car 30 is stopped (parked) will be described, but the VaaNI service may be provided even during movement (driving) of the car 30.

### <1.3. Example of wireless access link>

The wireless communication in the wireless access link provided by the VaaNI terminal 30 can use 3GPP (registered trademark) cellular communication which is licensed band communication. Alternatively, the unlicensed band communication such as Wi-Fi (registered trademark) may be used as the wireless communication.

For example, when the VaaNI terminal 30 provides the wireless access link on the basis of the satellite communication in the rural area, Wi-Fi (registered) can be used as the wireless access link. This is because the service beneficiary (end user) may not have a rich terminal. Use of Wi-Fi (registered trademark) as the wireless communication in the wireless access link by the VaaNI terminal 30, for example, even a terminal device (e.g., a tablet terminal, a PC, or the like) that cannot perform cellular communication can enjoy VaaNI service.

In addition, IAB communication defined in 3GPP (registered trademark) may be used for the wireless access link and the backhaul link.

### <1.4. Example of business model>

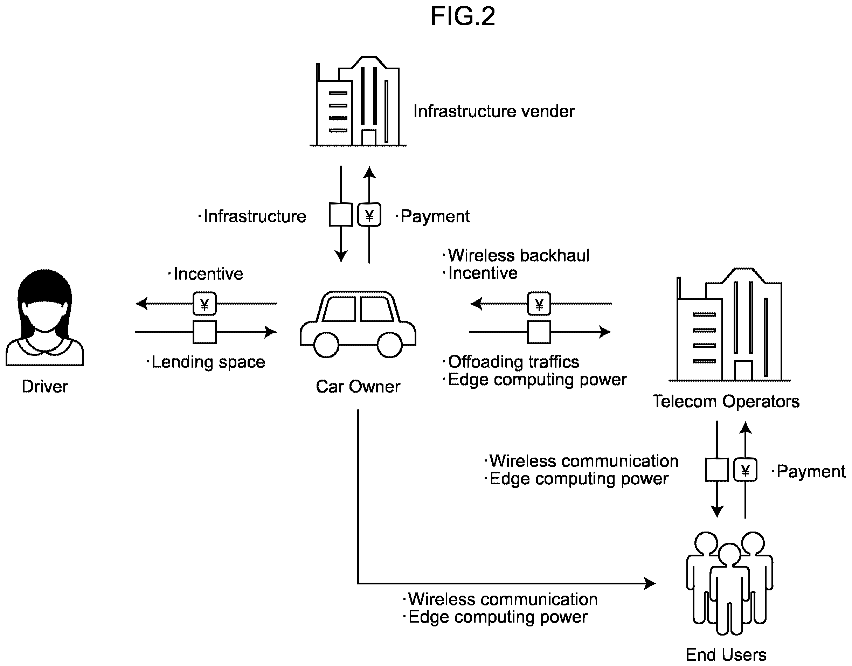

Next, an example of a business model using the VaaNI service will be described with reference to FIG. 2. Note that the model illustrated here is merely an example, and the VaaNI service according to the present disclosure can be used for another business model.

FIG. 2 is a diagram illustrating an example of the business model using the VaaNI service according to an embodiment of the present disclosure.

The telecom operator illustrated in FIG. 2 provides communication and computing power to the end user terminal 40 used by the service beneficiary (end user). For the communication and computing power, the end user pays money to the telecom operator.

In addition, the telecom operator provides a wireless backhaul for the car owner so that the car owner operates the vehicle as the communication infrastructure (base station (VaaNI terminal 30)). The car owner provides the communication and/or computing power as part of a communication network to receive an incentive.

The car owner establishes an infrastructure in order to operate the vehicle as the communication infrastructure (base station (VaaNI terminal 30)). For example, the car owner pays money to an infrastructure vendor, purchases an infrastructure device (e.g., corresponding to the above communication device and/or information processing device) for operating the vehicle as the communication infrastructure (base station (VaaNI terminal 30), and installs the infrastructure device in the vehicle. Alternatively, the car owner may purchase a vehicle in which the infrastructure device is installed.

For example, when the car owner is different from the driver, the car owner lends the VaaNI terminal 30 to the driver. For example, the car owner has the driver park (move) the VaaNI terminal 30 at a place desired by the telecom operator. The driver receives an incentive from the car owner in compensation for a spatial value.

### (Example of incentive)

As described above, the car owner and/or the driver receives the incentive for providing the wireless access link to the end user terminal 40. Examples of the incentive include money, a coupon, a digital incentive, and the like.

Examples of the coupon include a discount coupon or free coupon for parking where the VaaNI terminal 30 is parked, a discount coupon for a facility next to the parking, and the like.

Examples of the digital incentive include virtual currency, a digital token, a non fungible token (NFT), and the like. Furthermore, examples of the digital incentive include providing in-game content, an item, and the like.

### <<2. Exemplary configuration of communication system S1>>

### <2.1. Example of network architecture>

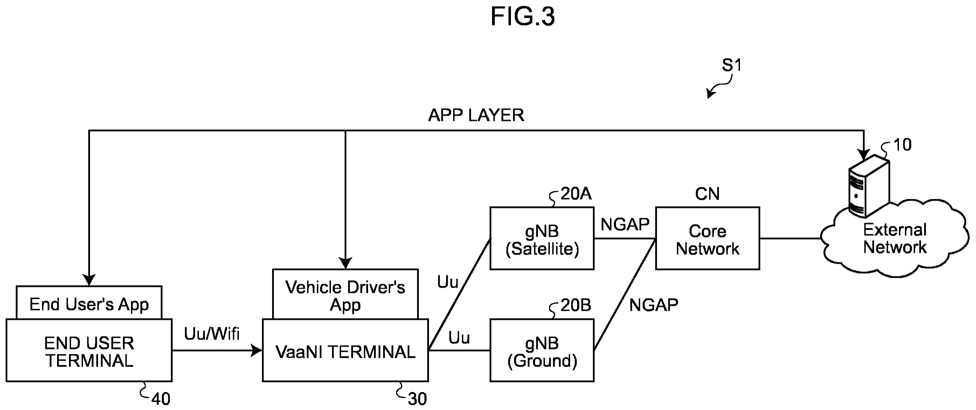

FIG. 3 is a diagram illustrating an example of a network architecture of the communication system S1 according to an embodiment of the present disclosure.

The telecom operator of the communication system S1 possesses a base station (gNB in the example of FIG. 3) 20, a core network CN, and an application server 10. Note that FIG. 3 illustrates an example in which the base stations 20 include a satellite station 20A and a ground station 20B.

### (Application server 10)

The application server 10 is positioned, for example, on an external network and is connected to the core network CN via the external network. For example, the external network may be a service network of the telecom operator, for example, an IP multimedia subsystem (IMS) network. Furthermore, the external network may be a private network such as an intranet.

The application server 10 is connected to a vehicle drivers app and an end user's app, which will be described later, in an app layer (application layer). The application server 10 exchanges information with the vehicle drivers app and the end user's app in this application layer.

### (Core network CN)

The core network CN includes, for example, an evolved packet core (EPC) or a 5G core network (5GC). When the core network CN is an NR core network (5GC), the core network CN can include an access and mobility management function (AMF), a session management function (SMF), a user plane function (UPF), a policy control function (PCF), and a unified data management (UDM).

The core network CN is connected to the external network via a gateway device (not illustrated). For example, the UPF that is a network function to process data of the user plane is connected to the application server 10 via a network function called data network (DN) identified by a data network name (DNN). Here, the DNN corresponds to an access point name (APN) used in systems prior to 4G.

### (Base station 20)

Each of the base stations 20 is a communication device that operates a cell and that provides the wireless communication service to one or more VaaNI terminals 30 positioned inside the coverage of the cell. The cell is operated according to any wireless communication system such as the long term evolution (LTE) or the new radio (NR). The base station 20 is connected to the core network CN. In addition, the base station 20 operates beams identifiable by a synchronization signal/PBCH block (SSB), and transmits and receives data to and from one or more VaaNI terminals 30 via one or more beams.

Furthermore, the base station 20 may include a set of a plurality of physical or logical devices. For example, in the present embodiment of the present disclosure, the base station 20 may be separated into a plurality of devices of a baseband unit (BBU) and a radio unit (RU) so as to be considered as an assembly of the plurality of devices. Additionally or alternatively, in the embodiments of the present disclosure, the base station 20 may be either or both of the BBU and the RU. The BBU and the RU may be connected through a predetermined interface (e.g., eCPRI). Additionally or alternatively, the RU may be referred to as remote radio unit (RRU) or radio dot (RD). Additionally or alternatively, the RU may correspond to gNB-DU which is described later. Additionally or alternatively, the BBU may correspond to gNB-CU which is described later. Additionally or alternatively, the RU may correspond to the gNB-DU which is described later. Furthermore, the BBU may correspond to a combination of the gNB-CU and the gNB-DU, which is described later. Additionally or alternatively, the RU may be a device integrally formed with an antenna. The antenna of the base station 20 (e.g., the antenna integrally formed with the RU) may adopt an advanced antenna system to support MIMO (e.g., FD-MIMO) or beamforming. In the advanced antenna system, the antennas of the base station 20 (e.g., the antenna integrally formed with the RU) may include, for example, 64 transmission antenna ports and 64 reception antenna ports.

Note that a plurality of the base stations 20 may be connected to each other. One or more base stations 20 may be included in a radio access network (RAN). In other words, the base station 20 may be simply referred to as RAN, RAN node, access network (AN), or AN node. RAN in LTE is referred to as enhanced universal terrestrial RAN (EUTRAN). RAN in NR is referred to as NGRAN. RAN in W-CDMA (UMTS) is referred to as UTRAN. The base station 20 in LTE is referred to as evolved Node B (eNodeB) or eNB. In other words, the EUTRAN includes one or a plurality of eNodeBs (eNBs). Furthermore, the base station 20 in NR is referred to as gNodeB or gNB. In other words, the NGRAN includes one or a plurality of gNBs. Furthermore, the EUTRAN may include gNB (en-gNB) connected to a core network (EPC) in an LTE communication system (EPS). Likewise, the NGRAN may include ng-eNB that is connected to the core network 5GC in a 5G communication system (5GS). Additionally or alternatively, when the base station 20 is the eNB, gNB, or the like, the base station may be referred to as 3GPP access. Additionally or alternatively, when the base station 20 is a wireless access point (e. g., Wi-Fi (registered trademark) access point), the base station 20 may be referred to as non-3GPP access. Additionally or alternatively, the base station 20 may be small cell radio equipment called remote radio head (RRH). Additionally or alternatively, when the base station 20 is gNB, the base station 20 may be referred to as a combination of the gNB central unit (CU) and the gNB distributed unit (DU) or any thereof. Here, the gNB CU hosts a plurality of upper layers (e.g., RRC, SDAP, and PDCP) of access stratum, for communication with UE. Meanwhile, the gNB-DU hosts a plurality of lower layers (e.g., RLC, MAC, and PHY) of the access stratum. In other words, among messages/information which is described later, RRC signalling (e.g., MIB, various SIBs including SIB1, RRCSetup messages, and RRCReconfiguration message) may be generated by the gNB CU, while downlink control information (DCI) and various physical channels (e.g., PDCCH and PBCH) may be generated by the gNB-DU. Alternatively, of RRC signalling, for example, a partial configuration (setting information) such as IE:cellGroupConfig may be generated by the gNB-DU, and the remaining configurations may be generated by the gNB-CU. These configurations (setting information) may be transmitted and received through an F1 interface which is described later. Note that the base station 20 may be configured to be communicable with another base station 20. For example, when a plurality of the base stations 20 is each the eNB or has a combination of the eNB and the en-gNB, the base stations 20 may be connected through an X2 interface. Additionally or alternatively, when the plurality of base stations 20 is each the gNB or has a combination of gn-eNB and the gNB, the devices may be connected through an Xn interface. Additionally or alternatively, when a plurality of base stations 20 has a combination of the gNB CU and the gNB DU, the devices may be connected through the F1 interface. The messages/information (RRC signalling information or DCI information, or physical channel), which is described later, may be communicated between a plurality of the base stations 20 (e.g., via X2, Xn, or F1 interface). Furthermore, communication may be performed between the base station 20 and the core network CN (using a message defined in application protocol (e.g., NGAP) on a base station-to-core network interface).

Furthermore, as described above, the base station 20 may be configured to manage a plurality of the cells. Each of the cells provided by the base station 20 is referred to as serving cell. The serving cells include a primary cell (PCell) and a secondary cell (SCell). When dual connectivity (e.g., EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity) is provided to an UE (e.g., VaaNI terminal 30), the PCell and zero or one or more SCell(s) provided by a master node (MN) are referred to as master cell group. Furthermore, the serving cell may include a primary secondary cell or primary SCG cell (PSCell). In other words, when dual connectivity is provided to the UE, the PSCell and zero or one or more SCell(s) provided by a secondary node (SN) are referred to as secondary cell group (SCG). Unless otherwise specifically set (e.g., PUCCH on SCell), a physical uplink control channel (PUCCH) is transmitted on the PCell and PSCell, but is not transmitted on the SCell. Furthermore, radio link failure is also detected on the PCell and the PSCell, but is not detected (may not be detected) on the SCell. In this way, the PCell and the PSCell that play special roles on the serving cell(s) are also referred to as special cell (SpCell). In one cell, one downlink component carrier and one uplink component carrier may be associated with each other. Furthermore, a system bandwidth corresponding to one cell may be divided into a plurality of bandwidth parts. In this configuration, one or a plurality of bandwidth parts (BWPs) may be set for UE and one of the bandwidth parts may be used as active BWP by the UE. In addition, radio resources (e.g., frequency band, numerology (sub-carrier spacing), and slot format (slot configuration)) used by the VaaNI terminal 30 may be different between cells, component carriers, or BWPs.

The base station 20 may be a ground station or a non-ground station. The non-ground station may be a satellite station or an aircraft station. If the non-ground station is the satellite station, the communication system S1 may be a bent-pipe (transparent) satellite mobile communication system.

Note that in the present embodiment, the ground station (also referred to as ground base station) refers to as a base station 20 (including a relay station) installed on the ground. Here "ground" represents a position not only on the land but also under the ground, on the water, and under the water in a broad sense. Note that, in the following description, "ground station" may be replaced with "gateway".

The VaaNI terminal 30 is a communication device that wirelessly communicates with the base station 20, on the basis of control by the base station 20. For example, the VaaNI terminal 30 is connected to the base station 20 via the wireless backhaul link. The wireless backhaul link is, for example, a Uu link. In addition, the VaaNI terminal 30 provides the end user terminal 40 with the wireless access link and/or the computing resource.

On the VaaNI terminal 30, for example, a vehicle driver's app runs. Alternatively, the vehicle driver's app may run on a device operated by the driver of the VaaNI terminal 30. The device operated by the driver of the VaaNI terminal 30 may be, for example, a terminal device such as a smartphone used by the driver, or may be an infotainment terminal mounted on the vehicle.

The vehicle driver's app performs registration for/withdrawal from the VaaNI service, and receives position information about a place of provision of the VaaNI service, and accompanying information. Examples of the accompanying information include information about the place of provision (presence or absence of parking lot or charging station), an assumed service provision time, an assumed amount of battery consumed, assumed incentive payment, and the like. In addition, the vehicle driver's app transmits and receives a signal related to the VaaNI service, such as acceptance or bidding for a request transmitted from the application server 10 or the end user's app.

The end user terminal 40 is a communication device that wirelessly communicates with the VaaNI terminal 30. For example, the end user terminal 40 is connected to the VaaNI terminal 30 via the wireless access link. This wireless access link is, for example, a Uu link or a Wi-Fi (registered trademark) link. The end user terminal 40 is provided with the VaaNI service by using the communication infrastructure and/or the computing infrastructure of the VaaNI terminal 30.

On the end user terminal 40, for example, the end user's app runs. The end user's app makes a request for the VaaNI service and transmits the accompanying information. Examples of the accompanying information include position information about a place where service provision is desired, required service provision time, necessity of the computing resource, and the like.

### <2.2. Exemplary configuration of application server>

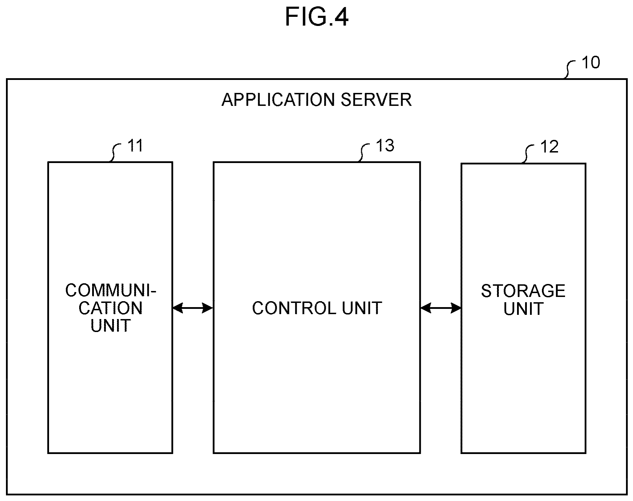

FIG. 4 is a block diagram illustrating an exemplary configuration of the application server 10 according to an embodiment of the present disclosure.

The application server 10 is a device that implements a management function of the VaaNI service. The application server 10 is, for example, a server device. The application server 10 may be a device collectively referred to as a cloud server or an edge server.

As illustrated in FIG. 4, the application server 10 includes a communication unit 11, a storage unit 12, and a control unit 13. Note that the configuration illustrated in FIG. 4 represents a functional configuration, and the application server 10 may have a hardware configuration different from this functional configuration. Furthermore, the functions of the application server 10 may be distributed in a plurality of physically separated configurations, for implementation. For example, the application server 10 may include a plurality of server devices.

The communication unit 11 is a communication interface for communication with another device. The communication unit 11 may be a network interface or a device connection interface. For example, the communication unit 11 may be a LAN interface such as a network interface card (NIC) or may be a universal serial bus (USB) interface including a USB host controller, a USB port, and the like. Furthermore, the communication unit 11 may be a wired interface or a wireless interface. The communication unit 11 functions as communication means for the application server 10. The communication unit 11 communicates with the base station 20, another NF node or AN node under the control of the control unit 13.

The storage unit 12 is a data readable/writable storage device such as dynamic random access memory (DRAM), static random access memory (SRAM), a flash memory, or a hard disk. The storage unit 12 functions as storage means for the application server 10.

The control unit 13 is a controller that controls the units of the application server 10. The control unit 13 is implemented by a processor such as a central processing unit (CPU), a micro processing unit (MPU), or a graphics processing unit (GPU). For example, the control unit 13 is implemented by executing various programs stored in a storage device in the application server 10 by the processor, with a random access memory (RAM) or the like as a workspace. Note that the control unit 13 may be implemented by an integrated circuit such as an application specific integrated circuit (ASIC) or a field programmable gate array (FPGA). The CPU, MPU, GPU, ASIC, and FPGA can all be regarded as controllers.

Furthermore, AF serving as a network function having a service based interface may be implemented in the control unit 13 so that services provided by the base station 20, the another NF node or AN node is available via the communication unit 11. For a service provided by a node having the service based interface, information can be exchanged between nodes by means of request/response or subscribe/notification.

### <2.3. Exemplary configuration of base station>

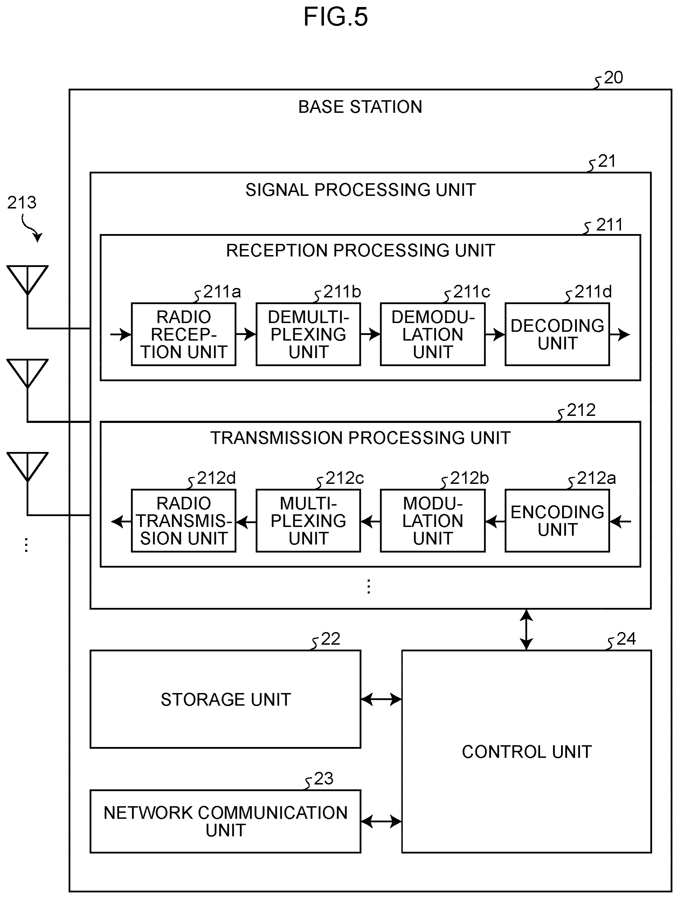

FIG. 5 is a diagram illustrating an exemplary configuration of the base station 20 according to an embodiment of the present disclosure. The base station 20 is a communication device (wireless system) that wirelessly communicates with the VaaNI terminal 30. The base station 20 is a type of the information processing device.

The base station 20 includes a signal processing unit 21, a storage unit 22, a network communication unit 23, and a control unit 24. Note that the configuration illustrated in FIG. 5 represents a functional configuration, and the base station 20 may have a hardware configuration different from this functional configuration. Furthermore, the functions of the base station 20 may be distributed in a plurality of physically separated devices for implementation. For example, as described above, the functions of the base station 20 are distributed to CU and DU or CU, DU, and RU.

The signal processing unit 21 is a wireless communication interface (communication unit) that wirelessly communicates with other communication devices (e.g., the VaaNI terminal 30 and another base station 20). The signal processing unit 21 is a wireless transceiver that operates under the control of the control unit 24. Note that the signal processing unit 21 may support a plurality of wireless access systems. For example, the signal processing unit 21 may support both of NR and LTE. The signal processing unit 21 may support other cellular communication systems such as W-CDMA and cdma2000. Furthermore, the signal processing unit 21 may support a wireless LAN communication system in addition to the cellular communication system. As a matter of course, the signal processing unit 21 may only support one wireless access system.

The signal processing unit 21 includes a reception processing unit 211, a transmission processing unit 212, and an antenna 213. The signal processing unit 21 may include a plurality of the reception processing units 211, the transmission processing units 212, and the antennas 213. Note that when the signal processing unit 21 supports the plurality of wireless access systems, the units of the signal processing unit 21 can be configured individually for each of the wireless access systems. For example, when the base station 20 supports NR and LTE, the reception processing units 211 and the transmission processing units 212 may be configured individually for the NR and the LTE.

The reception processing unit 211 processes an uplink signal received via the antenna 213. The reception processing unit 211 includes a radio reception unit 211a, a demultiplexing unit 211b, a demodulation unit 211c, and a decoding unit 211d.

The radio reception unit 211a performs, on the uplink signal, down conversion, removal of an unnecessary frequency component, control of an amplification level, quadrature demodulation, conversion to a digital signal, removal of a guard interval, and extraction of a frequency domain signal by fast Fourier transform, or the like. For example, it is assumed that the wireless access system of the base station 20 is a cellular communication system such as LTE. At this time, the demultiplexing unit 211b demultiplexes an uplink channel, such as a physical uplink shared channel (PUSCH) and physical uplink control channel (PUCCH), and an uplink reference signal, from a signal output from the radio reception unit 211a. The demodulation unit 211c performs demodulation of a received signal by using a modulation method such as binary phase shift keying (BPSK) or quadrature phase shift keying (QPSK), on a modulated symbol on an uplink channel. The modulation method used by the demodulation unit 211c may employ multi-level QAM such as 16 quadrature amplitude modulation (QAM), 64QAM, or 256QAM. The decoding unit 211d performs decoding processing on encoded bits in the uplink channel demodulated. Decoded uplink data and uplink control information are output to the control unit 24.

The transmission processing unit 212 performs transmission processing for downlink control information and downlink data. The transmission processing unit 212 includes an encoding unit 212a, a modulation unit 212b, a multiplexing unit 212c, and a radio transmission unit 212d.

The encoding unit 212a performs encoding of the downlink control information and the downlink data that are input from the control unit 24, by using an encoding method such as block coding, convolutional coding, or turbo coding. Note that, as the encoding, polar code encoding and low density parity check code (LDPC) encoding may be performed. The modulation unit 212b modulates encoded bits output from the encoding unit 212a, by using a predetermined modulation method such as BPSK, QPSK, 16QAM, 64QAM, or 256QAM. The multiplexing unit 212c allocates a modulated symbol and a downlink reference signal that are multiplexed for each channel, to a predetermined resource element. The radio transmission unit 212d performs various types of signal processing on a signal from the multiplexing unit 212c. For example, the radio transmission unit 212d performs processing such as conversion to a time domain by using fast Fourier transform, addition of the guard interval, generation of a baseband digital signal, conversion to an analog signal, quadrature modulation, up-conversion, removal of an unnecessary frequency component, and amplification of power. The signal generated by the transmission processing unit 212 is transmitted from the antenna 213.

The storage unit 22 is a data readable/writable storage device such as DRAM, SRAM, a flash memory, or a hard disk. The storage unit 22 functions as storage means for the base station 20.

The network communication unit 23 is a communication interface for communication with another device (e.g., another base station 20). For example, the network communication unit 23 includes a LAN interface such as NIC. The network communication unit 23 may be a USB interface including a USB host controller, a USB port, and the like. Furthermore, the network communication unit 23 may be a wired interface or a wireless interface. The network communication unit 23 functions as network communication means for the base station 20. The network communication unit 23 communicates with another device under the control of the control unit 24.

The control unit 24 is a controller that controls the units of the base station 20. The control unit 24 is implemented by a processor such as CPU, MPU, or GPU. For example, the control unit 24 is implemented by executing various programs stored in the storage device inside the base station 20 by the processor, with RAM or the like as a workspace. Note that the control unit 24 may be implemented by an integrated circuit such as ASIC or FPGA. The CPU, MPU, GPU, ASIC, and FPGA can all be regarded as controllers.

### <2.4. Exemplary configuration of VaaNI terminal>

The VaaNI terminal 30 is a device serving as a relay station for the base station 20. The VaaNI terminal 30 is a type of communication device. In addition, the VaaNI terminal 30 is a type of the information processing device. The VaaNI terminal 30 can also be referred to as a relay base station. Furthermore, the VaaNI terminal 30 may be a device called a repeater (e. g., RF Repeater, Smart Repeater, Network Controlled Repeater, Intelligent Surface).

The VaaNI terminal 30 is allowed to perform wireless communication such as NOMA communication, with the end user terminal 40. The VaaNI terminal 30 relays communication between the base station 20 and the end user terminal 40. Note that the VaaNI terminal 30 may be configured to enable wirelessly communicate with another VaaNI terminal 30 and the base station 20. The VaaNI terminal 30 may configure a radio access network RAN with the base station 20.

Note that the VaaNI terminal 30 may have a configuration similar to that of the base station 20 described above. For example, the VaaNI terminal 30 may be a device installed at a mobile object or the mobile object itself. In addition, the mobile object may be a mobile object that moves on land (on the ground) or may be a mobile object that moves under the ground. As a matter of course, the mobile object may be a mobile object that moves on the water or may be a mobile object that moves under water.

Furthermore, the VaaNI terminal 30 may have beamforming capability. In this case, the VaaNI terminal 30 may be configured so that a cell or service area is formed for each beam.

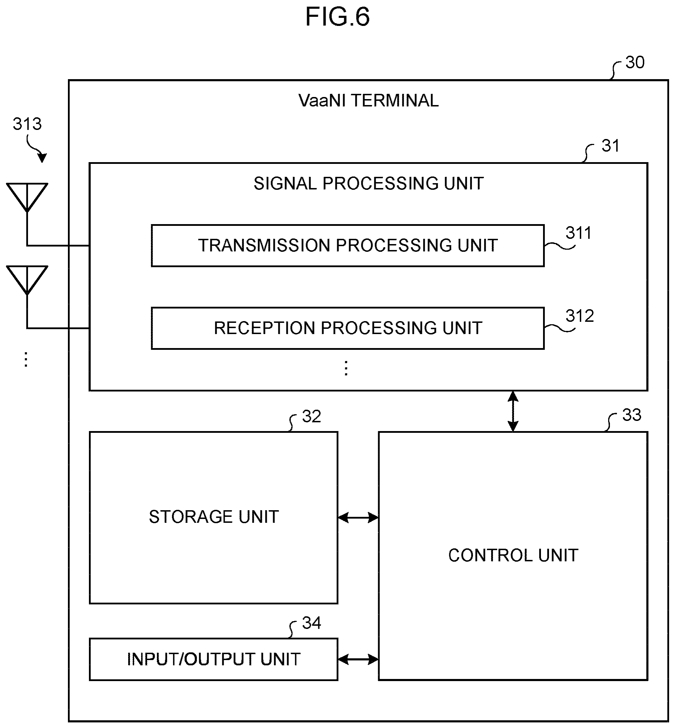

FIG. 6 is a diagram illustrating an exemplary configuration of the VaaNI terminal 30 according to an embodiment of the present disclosure. The VaaNI terminal 30 includes a signal processing unit 31, a storage unit 32, a control unit 33, and an input/output unit 34. Note that the configuration illustrated in FIG. 6 represents a functional configuration, and the VaaNI terminal 30 may have a hardware configuration different from this functional configuration. Furthermore, the functions of the VaaNI terminal 30 may be distributed in a plurality of physically separated configurations, for implementation.

The signal processing unit 31 is a wireless communication interface that wirelessly communicates with other wireless communication devices (e.g., the base station 20, the end user terminal 40, and another VaaNI terminal 30). The signal processing unit 31 supports one or a plurality of wireless access systems. For example, the signal processing unit 31 supports both of NR and LTE. The signal processing unit 31 may support W-CDMA or cdma2000, in addition to the NR and the LTE. The signal processing unit 31 includes a transmission processing unit 311, a reception processing unit 312, and an antenna 313. The signal processing unit 31 may include a plurality of the transmission processing units 311, the reception processing units 312, and the antennas 313. Note that when the signal processing unit 31 supports the plurality of wireless access systems, the units of the signal processing unit 31 may be configured individually for each of the wireless access systems. For example, the transmission processing units 311 and the reception processing units 312 may be configured individually for the LTE and the NR. The transmission processing unit 311, the reception processing unit 312, and the antenna 313 have configurations similar to the above configurations of the transmission processing unit 212, the reception processing unit 211, and the antenna 213. Note that the signal processing unit 31 may be configured to enable beamforming, as in the signal processing unit 21.

The storage unit 32 is a data readable/writable storage device such as DRAM, SRAM, a flash memory, or hard disk. The storage unit 32 functions as storage means for the VaaNI terminal 30.

The control unit 33 is a controller that controls the units of the VaaNI terminal 30. The control unit 33 is implemented by a processor such as CPU, MPU, or GPU. For example, the control unit 33 is implemented by executing various programs stored in the storage device inside the VaaNI terminal 30 by the processor, with RAM or the like as a workspace. Note that the control unit 33 may be implemented by an integrated circuit such as ASIC or FPGA. The CPU, MPU, GPU, ASIC, and FPGA can all be regarded as controllers. The operation of the control unit 33 may be the same as the operation of the control unit 24 of the base station 20.

The input/output unit 34 is a user interface for exchanging information with the user such as the driver. For example, the input/output unit 34 is an operation device, such as a keyboard, mouse, operation keys, or touch screen, for various operations by the user. Alternately, the input/output unit 34 is a display device such as a liquid crystal display or organic electroluminescence (EL) display. The input/output unit 34 may be an acoustic device such as a speaker or buzzer. Furthermore, the input/output unit 34 may be a lighting device such as a light emitting diode (LED) lamp. The input/output unit 34 functions as input/output means (input means, output means, operation means, or reporting means) of the VaaNI terminal 30. The input/output unit 34 may be a car navigation device or an infotainment device, mounted on the car (VaaNI terminal 30). Furthermore or alternatively, the input/output unit 34 may be a wireless communication device (e.g., smartphone) owned by the driver, connected to the car (VaaNI terminal 30) in a wired or wireless manner. From this viewpoint, the input/output unit 34 may be an external device to the VaaNI terminal 30.

Note that the VaaNI terminal 30 may be an IAB relay node. The VaaNI terminal 30 operates as an IAB-mobile termination (MT), for an IAB donor node providing backhaul, and operates as an IAB-distributed unit (DU) for the end user terminal 40 providing access. The IAB donor node may be, for example, the base station 20, and operates as an IAB-central unit (CU).

### <2.5. Exemplary configuration of end user terminal>

The end user terminal 40 is a wireless communication device that wirelessly communicates with other communication devices such as the base station 20 and the VaaNI terminal 30. The end user terminal 40 is, for example, a mobile phone, smart device (smartphone or tablet), personal digital assistant (PDA), or personal computer. Furthermore, the end user terminal 40 may be a device, such as a business camera, provided with a communication function, or may be a motorcycle, a moving relay vehicle, or the like, on which a communication device such as a field pickup unit (FPU) is mounted. Furthermore, the end user terminal 40 may be a machine to machine (M2M) device or an Internet of things (IoT) device.

Note that the end user terminal 40 may enable NOMA communication with the VaaNI terminal 30. Furthermore, in communication with the VaaNI terminal 30, the end user terminal 40 may enable to use an automatic retransmission technology such as HARQ. Furthermore, the end user terminal 40 may enable sidelink communication with another end user terminal 40. The end user terminal 40 may enable using the automatic retransmission technology such as HARQ upon the sidelink communication. Note that the end user terminal 40 may also enable NOMA communication in communication (sidelink) with the another end user terminal 40. Furthermore, the end user terminal 40 may enable LPWA communication with other communication devices (e.g., the VaaNI terminal 30 and another end user terminal 40). In addition, wireless communication used by the end user terminal 40 may be wireless communication using millimeter waves. Note that wireless communication (including sidelink communication) used by the end user terminal 40 may be wireless communication using radio waves or wireless communication using infrared or visible light (optical wireless communication).

Furthermore, the end user terminal 40 may be a mobile device. Here, the mobile device is a movable wireless communication device. At this time, the end user terminal 40 may be a wireless communication device installed on a mobile object or the mobile object itself. For example, the end user terminal 40 may be a vehicle that moves on a road, such as an automobile, bus, truck, or motorcycle, or a wireless communication device mounted on the vehicle. Note that the mobile object may be a mobile terminal, or may be a mobile object that moves on land (on the ground), under the ground, on the water, or under the water. Furthermore, the mobile object may be a mobile object that moves in the atmosphere, such as a drone or a helicopter, or may be a mobile object that moves above the atmosphere, such as an artificial satellite.

The end user terminal 40 may be connected to a plurality of the VaaNI terminals 30 or a plurality of cells simultaneously to perform communication. For example, when one VaaNI terminal 30 supports a communication area via the plurality of cells (e.g., pCell and sCell), it is possible to combine the plurality of cells by a carrier aggregation (CA) technology, a dual connectivity (DC) technology, or a multi-connectivity (MC) technology, enabling communication between the VaaNI terminal 30 and the end user terminal 40. Alternatively, it is also possible to perform communication, via cells of different VaaNI terminals 30, between the end user terminal 40 and a plurality of the VaaNI terminals 30 by a coordinated multi-point transmission and reception (CoMP) technology.

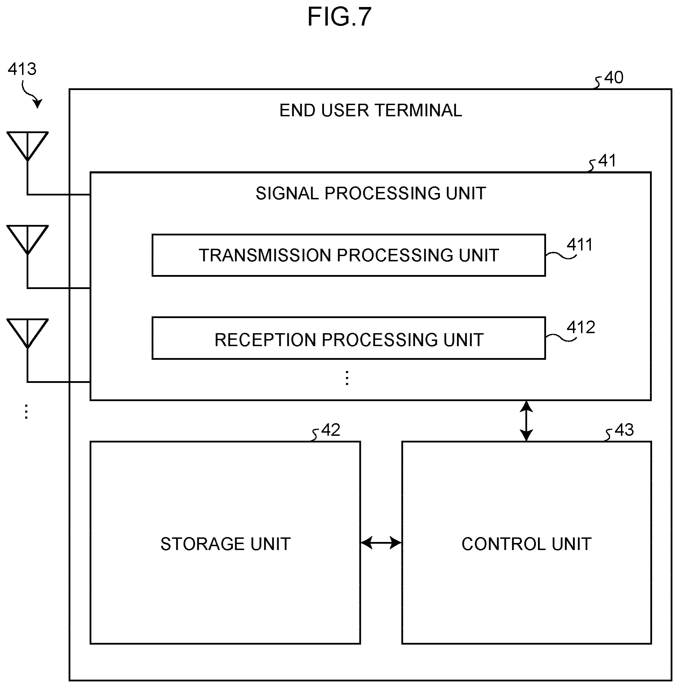

FIG. 7 is a diagram illustrating an exemplary configuration of the end user terminal 40 according to an embodiment of the present disclosure. The end user terminal 40 includes a signal processing unit 41, a storage unit 42, and a control unit 43. Note that the configuration illustrated in FIG. 7 represents a functional configuration, and the end user terminal 40 may have a hardware configuration different from this functional configuration. Furthermore, the functions of the end user terminal 40 may be distributed in a plurality of physically separated configurations, for implementation.

The signal processing unit 41 is a signal processing unit for wirelessly communication with other wireless communication devices (e.g., the base station 20, the VaaNI terminal 30, and another end user terminal 40). The signal processing unit 41 operates under the control of the control unit 43. The signal processing unit 41 includes a transmission processing unit 411, a reception processing unit 412, and an antenna 413. The configurations of the signal processing unit 41, the transmission processing unit 411, the reception processing unit 412, and the antenna 413 may be similar to those of the signal processing unit 21, the transmission processing unit 212, the reception processing unit 211, and the antenna 213 of the base station 20. Furthermore, the signal processing unit 41 may be configured to enable beamforming, as in the signal processing unit 21. Furthermore, the signal processing unit 41 may be configured to enable transmission and reception of spatially multiplexed signals, as in the signal processing unit 21.

The storage unit 42 is a data readable/writable storage device such as DRAM, SRAM, a flash memory, or a hard disk. The storage unit 42 functions as storage means for the end user terminal 40.

The control unit 43 is a controller that controls the units of the end user terminal 40. The control unit 43 is implemented by a processor such as CPU or MPU. For example, the control unit 43 is implemented by executing various programs stored in the storage device inside the end user terminal 40 by the processor, with RAM or the like as a workspace. Note that the control unit 43 may be implemented by an integrated circuit such as ASIC or FPGA. The CPU, MPU, ASIC, and FPGA can all be regarded as controllers. Furthermore, the control unit 43 may be implemented by GPU in addition to or instead of the CPU.

### <<3. Operation examples of communication system>>

The operation of the communication system S1 will be described below.

The operation (e.g., operation of the VaaNI service) of the VaaNI terminal 30 (vehicle infrastructure) described above is desirably dynamically controlled for a necessary time and at a necessary place. The operation of the VaaNI terminal 30 requires costs (vehicle battery consumption and incentive payment to the car owner, etc.), and thus, it is desirable to perform the operation at necessary timing.

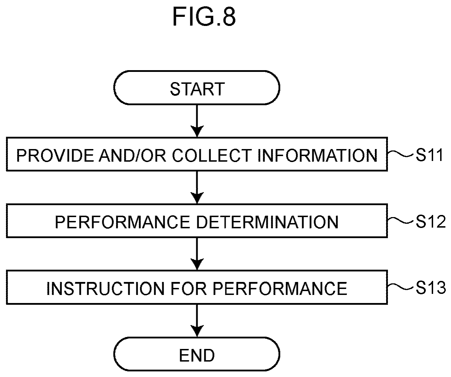

FIG. 8 is a flowchart illustrating an exemplary procedure of a process for performing the operation of the VaaNI terminal 30 according to an embodiment of the present disclosure. The process illustrated in FIG. 8 is performed, for example, by the communication system S1.

As illustrated in FIG. 8, the communication system S1 provides and/or collects information to perform the operation of the VaaNI terminal 30 (Step S11).

Next, the communication system S1 makes a performance determination to determine whether to perform the operation (Step S12), and when performing the operation, an instruction is given for performing the operation (Step S13).

Specifically, examples of a person who determines the operation to determine the performance of the operation include the operator, the car owner, and the service beneficiary in communication (end user). The person who determines the operation performs the process of FIG. 8 via a device of his/her-own. In the communication system S1, a system for performing this process is constructed.

In this way, examples of a node that performs the process for performing the operation include devices (e.g., the application server 10, the VaaNI terminal 30, and the end user terminal 40, respectively) operated by the operator, the car owner, and the service beneficiary in communication (end user). The nodes determine whether the VaaNI terminal 30 provides the wireless access link. In other words, each of the nodes controls on/off of a facility (vihicle infrastructure) that provides the wireless access link of the VaaNI terminal 30.

While each node may perform the process for performing the operation, the nodes require different information provided/collected for or methods of instruction for performing the process. Therefore, hereinafter, an example of an operation method will be described for each person who determines the operation, in other words, for each node that performs the process for performing the operation.

Note that the VaaNI terminal 30 provides wireless access links, for the inside and outside of the car. For example, the VaaNI terminal 30 has a communication providing function for providing the wireless access link to the end user terminal 40, such as a smartphone, used by the driver. In addition, the VaaNI terminal 30 has a communication providing function for providing the wireless access link to the end user terminal 40 used by an end user outside the car such as a pedestrian.

Hereinafter, unless otherwise specified, it is assumed that the VaaNI terminal 30 provides the wireless access link to the outside of the car. The person who determines the operation (node) determines whether to enable the communication providing function of the VaaNI terminal 30 for providing the wireless access link to the outside of the car.

In this way, the communication system S1 operates the car (VaaNI terminal 30) used by a general user as a network communication infrastructure. As a result, the communication system S1 enables to increase the capacity of the entire communication network on demand and dynamically.

In addition, operation of the VaaNI terminal 30 as an edge computing infrastructure makes it possible for the communication system S1 to provide computing power to local applications.

Furthermore, although details will be described later, the communication system S1 provides the car owner and the driver, with information for operating the VaaNI terminal 30 as the communication infrastructure. Therefore, the communication system S1 enables performance of dynamic network deployment that satisfies a request from the telecom operator and satisfies a request from the car owner.

### <3.1. First Embodiment>

### <3.1.1. Overview of first embodiment>

Here, a description will be made of determination of performance of the operation of the VaaNI service by the operator, in other words, an instruction for implementation of the VaaNI service from the application server 10.

As described above, the VaaNI terminal 30 provides a second wireless access link (an example of the wireless access link) with the end user terminal 40 (an example of other wireless communication devices), on the basis of the wireless backhaul link (an example of the first wireless access link) with the base station 20.

The VaaNI terminal 30 includes one or a plurality of the signal processing units 31 (an example of the network interface). In addition, the VaaNI terminal 30 includes the input/output unit 34 (an example of the user interface).

The control unit 33 (an example of a processor) of the VaaNI terminal 30 transmits a registration request or a start request related to provision of the wireless access link, to the application server 10 that manages provision of the wireless access link via the signal processing unit 31.

The control unit 33 of the VaaNI terminal 30 starts provision of the wireless access link according to an instruction from the application server 10.

This configuration enables the VaaNI terminal 30 to provide the VaaNI service according to the instruction from the application server 10, and the communication system S1 may deploy the communication infrastructure at low cost.

### <3.1.2. Operation execution process>

In the communication system S1, an operation execution process is performed to provide the VaaNI service. The operation execution process includes a service registration process, a service standby process, and a service implementation process.

The service registration process is a process for the VaaNI terminal 30 to perform service registration to provide the VaaNI service. The service standby process is a process for the VaaNI terminal 30 to prepare provision of the VaaNI service. The service implementation process is a process for the VaaNI terminal 30 to start to provide the VaaNI service.

### (Service registration process)

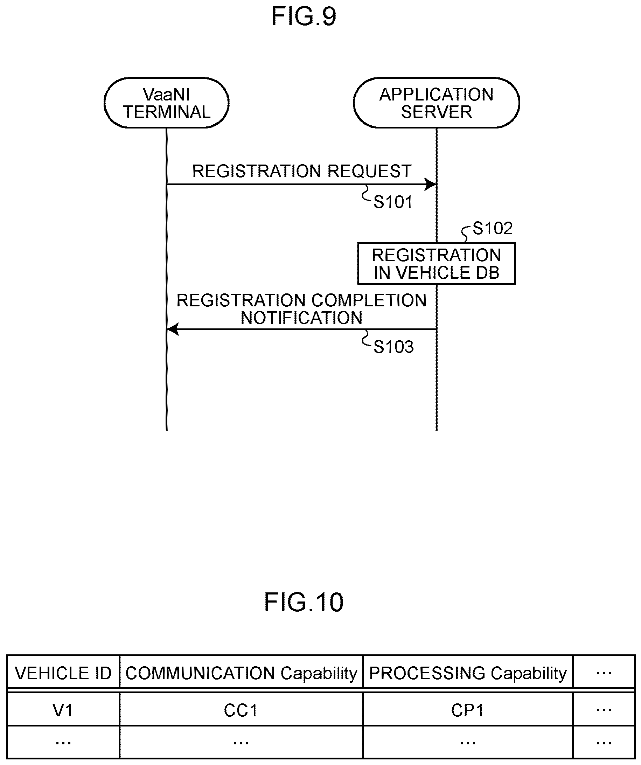

FIG. 9 is a sequence diagram illustrating an exemplary procedure of the service registration process according to a first embodiment of the present disclosure. The service registration process of FIG. 9 is performed between the VaaNI terminal 30 and the application server 10. For example, the service registration process may be performed when the VaaNI terminal 30 is registered as a VaaNI service providing node, for example, when the operator and the car owner close a contract for providing the VaaNI service.

As illustrated in FIG. 9, the VaaNI terminal 30 transmits the registration request to the application server 10 (Step S101). The registration request can include, for example, at least one of identification information of the car owner or the driver and identification information (vehicle ID) of the car (VaaNI terminal 30). Furthermore, the registration request can include, for example, at least one of communication capability information about and computing (processing) capability information about the VaaNI terminal 30.

The application server 10 registers information about the VaaNI terminal 30 that has transmitted the registration request, in a vehicle data base (DB) (Step S102). For example, the application server 10 registers the information about the VaaNI terminal 30 in the vehicle DB, on the basis of the registration request.

Thereafter, the application server 10 transmits a registration completion notification, to the VaaNI terminal 30 (Step S103).

FIG. 10 is a table illustrating an example of the vehicle DB according to the first embodiment of the present disclosure. The vehicle DB is provided in, for example, the storage unit 12 of the application server 10. Alternatively, for example, a database device on a data network may include the vehicle DB.

As illustrated in FIG. 10, the vehicle DB stores a vehicle ID, a communication capability, and a processing capability in association with each other. The vehicle ID is identification information of the car (VaaNI terminal 30) included in the registration request. In the example of FIG. 10, the vehicle DB stores "V1 " as the vehicle ID.

The communication capability includes, for example, information about the wireless access link that may be provided by the VaaNI terminal 30. The communication capability includes, for example, the presence or absence of a relay function, antenna gain information, a corresponding frequency (band), modem information, and the like. In the example of FIG. 10, the vehicle DB stores "CC1 " as the communication capability of the vehicle ID "V1".

The processing capability includes, for example, information about the computing resource that can be provided by the VaaNI terminal 30. The processing capability includes, for example, information such as a computational capability (Flops) and an amount of processing delay. In the example of FIG. 10, the vehicle DB stores "CP1" as the processing capability of the vehicle ID **"V1".**

When the VaaNI terminal 30 does not provide the computing resource, a space of the processing capability of the vehicle DB may be left in blank. Alternatively, provision of no resource may be stored in the processing capability of the vehicle DB, and "Null" may be stored.

Note that the vehicle DB illustrated in FIG. 10 is merely an example, and the information stored in the vehicle DB is not limited to the example of FIG. 10. For example, the vehicle DB may store information about the contract (e.g., the type of the contract or the like.) or information about the incentive (e.g., the type of the incentive, payment method, or the like).

Furthermore, in the above service registration process illustrated in FIG. 9, the VaaNI terminal 30 has transmitted the registration request, but the device that transmits the registration request is not limited to the VaaNI terminal 30. For example, an information processing device (e.g., a smartphone, PC, tablet terminal, or the like) used by the car owner may transmit the registration request. Alternatively, an information processing device of the operator may transmit the registration request to the application server 10.

### (Service standby process)

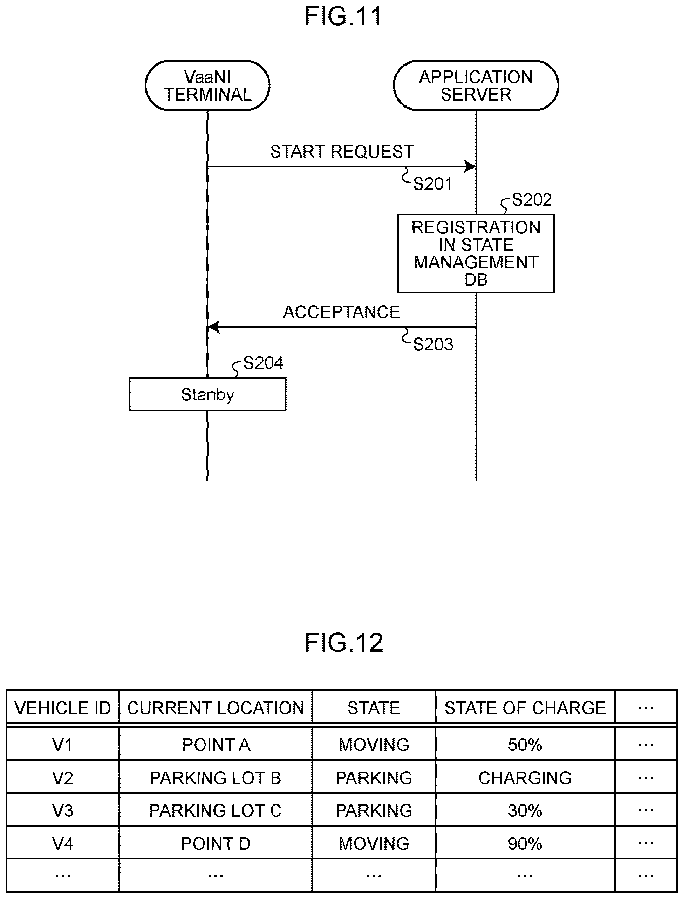

FIG. 11 is a sequence diagram illustrating an exemplary procedure of the service standby process according to the first embodiment of the present disclosure. The service standby process of FIG. 11 is performed between the VaaNI terminal 30 and the application server 10.

For example, the service standby process is performed when the VaaNI terminal 30 determines to start operation as the VaaNI service providing node. For example, the service standby process may be performed, on the basis of activation of the vehicle drivers app in the VaaNI terminal 30.

As illustrated in FIG. 11, the VaaNI terminal 30 transmits the start request to the application server 10 (Step S201). The start request can include, for example, at least one of the identification information of the car owner or the driver and the identification information (vehicle ID) of the car (VaaNI terminal 30). Furthermore, the start request can include, for example, at least one of position information indicating a current location of the VaaNI terminal 30, a state of the VaaNI terminal 30 (e.g., whether the vehicle is moving or parked, or the like), and a state of charge. Note that details of the information included in the start request will be described later.

The application server 10 registers the information about the VaaNI terminal 30 that has transmitted the start request, in a state management data base (DB) (Step S202). The application server 10 registers the information about the VaaNI terminal 30 in the state management DB, on the basis of, for example, the start request.

Thereafter, the application server 10 transmits an acceptance to the VaaNI terminal 30 (Step S203). The VaaNI terminal 30 having received the acceptance shifts to standby (Step S204) and waits for an instruction for start of the VaaNI service.

FIG. 12 is a table illustrating an example of a state management DB according to the first embodiment of the present disclosure. The state management DB is provided in, for example, the storage unit 12 of the application server 10. Alternatively, for example, the database device on the data network may include the state management DB.

As illustrated in FIG. 12, the state management DB stores the vehicle ID, the current location, the state, and the state of charge in association with each other. The vehicle ID is identification information of the car (VaaNI terminal 30) included in the registration request. The current location is information indicating the current location of the car (VaaNI terminal 30).

The state is information indicating a current state of the car. In the example of FIG. 12, the state is information indicating whether the vehicle is moving or parked. The state of charge is information indicating a charging state of the car. The state of charge is information indicating a percentage of current charge to full charge or indicating that the battery is being charged.

In the example of FIG. 12, the VaaNI terminal 30 having the vehicle ID "V1" indicates the current location "point A", the state "moving", and the state of charge of "50%". In addition, the VaaNI terminal 30 having the vehicle ID "V2" indicates the current location "parking lot B", the state "parking", and the state of charge "charging".

Note that the state management DB illustrated in FIG. 12 is merely an example, and the information stored in the state management DB is not limited to the example of FIG. 12. The state management DB may store, for example, a scheduled parking time and the like. The state management DB may store, for example, information included in the start request which is described later.

In addition, the state management DB may be updated according to information from the VaaNI terminal 30. For example, the state management DB may be updated on a constant cycle. In other words, the VaaNI terminal 30 may notify the application server 10 of information about itself (state information for updating the state management DB) on the constant cycle.

Alternatively, the state management DB may be updated when the VaaNI terminal 30 has moved a certain distance or more. In this configuration, the VaaNI terminal 30 may notify the application server 10 of the state information when the moving distance becomes a certain distance or more.

In addition, the state management DB may be updated, when the state of the VaaNI terminal 30 changes, for example, when the state of the VaaNI terminal 30 changes from moving to parking. In this configuration, when detecting a change in the state, the VaaNI terminal 30 may notify the application server 10 of the state information, for example, on the basis of stop/start of an engine of the car.

In addition, the state management DB may be updated, when the state of charge of the VaaNI terminal 30 changes, for example, when charging of the VaaNI terminal 30 is started or the percentage of charge of the VaaNI terminal 30 exceeds a predetermined value. In this configuration, when detecting the start of charging or when the percentage of charge exceeds the predetermined value, the VaaNI terminal 30 may notify the application server 10 of the state information.

Note that conditions for updating the state management DB are not limited to the above examples. The state management DB may be updated when there is a change in the state information, which is described later.

In addition, the notification of the state information may be performed voluntarily by the VaaNI terminal 30 or may be performed in response to a request from the application server 10. In addition, the notification of the state information may be performed by means of request/response or subscribe/notification, for a notification service for the state information via the service based interface,.

In addition, here, the service registration process and the service standby process have been performed at different timings in the communication system S1, but the service registration process and the service standby process may be performed at the same timing. In this configuration, the service registration process and the service standby process may be performed as one process. For example, the VaaNI terminal 30 may collect the registration request transmitted in Step S101 of FIG. 9 and the start request transmitted in Step S201 of FIG. 11 into one request, for transmission.

In addition, here, the vehicle DB and the state management DB have been configured to be different DBs, but the vehicle DB and the state management DB may be combined into one DB.

### (Service implementation process)

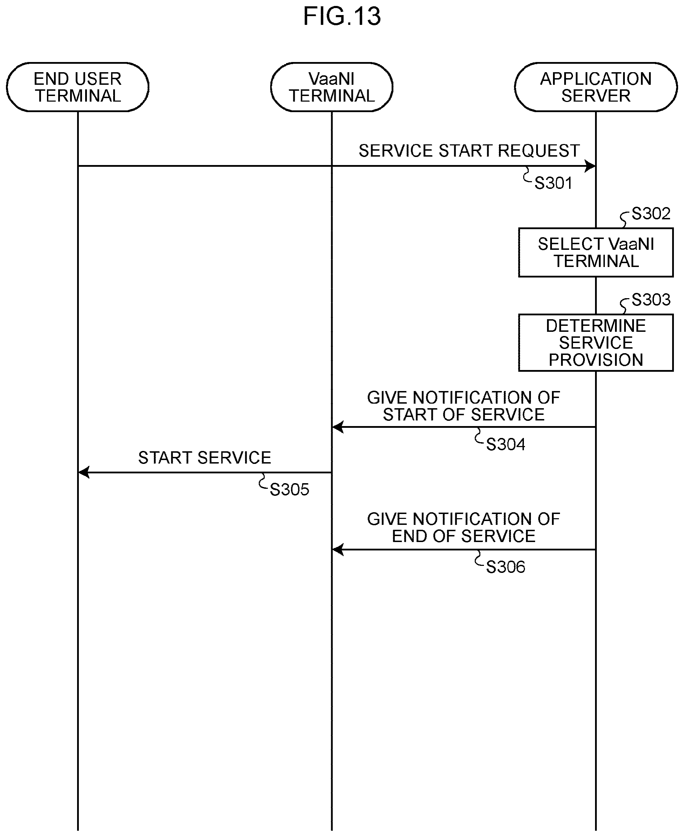

FIG. 13 is a sequence diagram illustrating an exemplary procedure of the service implementation process according to the first embodiment of the present disclosure. The service implementation process of FIG. 13 is performed between the end user terminal 40, the VaaNI terminal 30, and the application server 10. For example, the service implementation process may be performed when the VaaNI service is started.

As illustrated in FIG. 13, the application server 10 receives a service start request for requesting start of the VaaNI service, from the end user terminal 40 (Step S301). The service start request may include information about the end user (end user information). For example, the service start request may include position information of the end user terminal 40, the service provision time requested by the end user terminal 40, and necessity of provision of the computing resource.

The application server 10 that has received the service start request selects a VaaNI terminal 30 that provides the VaaNI service (Step S302). The application server 10 selects the VaaNI terminal 30 on the basis of, for example, static/quasi-static VaaNI information. The static/quasi-static VaaNI information includes, for example, information stored in the vehicle DB and the state management DB. The static/quasi-static VaaNI information will be described in detail below.

The application server 10 determines service provision using the selected VaaNI terminal 30 (Step S303). As described above, in the present embodiment, the application server 10 on the operation side determines the start of the VaaNI service (performance of the operation).

The application server 10 notifies the VaaNI terminal 30 of the start of the service (Step S304).

Upon receiving the notification, the VaaNI terminal 30 starts the VaaNI service to the end user terminal 40 (Step S305). For example, when receiving the notification of the start of the service, the VaaNI terminal 30 transmits a discovery signal to surroundings. The end user terminal 40 that has received the discovery signal notifies the VaaNI terminal 30 of an on-request. Therefore, the VaaNI terminal 30 operates as a cell (base station or relay station) and starts to provide the VaaNI service.

For end of the VaaNI service, the application server 10 notifies the VaaNI terminal 30 of end of the VaaNI service (Step S306). Therefore, the VaaNI terminal 30 ends the provision of the VaaNI service.

Note that the application server 10 may determine the end of the VaaNI service, for example, when a predetermined service provision time has passed, or in response to a request from the VaaNI terminal 30, or the like.

Furthermore, although the application server 10 has determined the end of the VaaNI service here, the VaaNI terminal 30 may determine the end of the VaaNI service.

### <3.1.3. Implementation conditions>

### (Start condition)

In the service implementation process described above, the application server 10 has determined the start of the VaaNI service in response to the request from the end user terminal 40, but the condition for the application server 10 to determine the start of the VaaNI service is not limited thereto. Hereinafter, a description will be made of an example of a condition (start condition) that the application server 10 determines the implementation of the VaaNI service. For example, when at least one of the following start conditions is satisfied, the application server 10 activates the VaaNI terminal 30 to operate as the communication infrastructure (base station).

·The VaaNI terminal 30 is in an operation available area specified by the operator.
·The VaaNI terminal 30 is in a preset area.
·The requests are made by end users, the number of which is equal to or more than the number of end users set in advance.
·Computing processing requests, the number of which is equal to or more than the number of computing processing requests set in advance are made.
·The incentive equal to or more than a previously set incentive has promise.
·Preset backhaul quality can be satisfied.

For example, the application server 10 determines implementation of the VaaNI service when the VaaNI terminal 30 is in the operation available area specified by the operator. When entrance of the VaaNI terminal 30 moving, into the operation available area is detected, the application server 10 may automatically activate the VaaNI terminal 30.

The operation available area specified by the operator is, for example, an operation available area for the VaaNI service. The operation available area is, for example, an area in which the base station 20 has poor communication quality (equal to or less than a predetermined threshold). The operator determines the operation available area by using, for example, a minimaization of drive test (MDT) function.

For example, the application server 10 refers to the state management DB to select a VaaNI terminal 30 positioned in the operation available area, as a device that provides the VaaNI service.

Note that the area for determination of the implementation of the VaaNI service by the application server 10 is not limited to the operation available area specified by the operator, and may be, for example, the preset area. For example, an area in which the service is provided may be set in advance according to a request from the end user.

The application server 10 may make a determination of implementation of the VaaNI service also in the preset area as in the operation available area specified by the operator.

In addition, when connection requests to the network are made from the end users, the number of which is equal to or more than the preset number of end users, the application server 10 activates the VaaNI function of the VaaNI terminal 30. The connection requests are, for example, a VaaNI service start request.

In this case, each of the end user terminals 40 notifies the base station 20 of the connection request. At this time, the end user terminal 40 may give notification of the connection request including the position information of the end user terminal 40.

The base station 20 uses at least one of the positions of the end users and the number of connection requests to determine whether to deploy another base station 20 (or relay station) to a target area. When it is determined that the another base station 20 is to be deployed, the base station 20 requests the application server 10 to add a vehicle-mounted base station as the another base station in the area identified.

The application server 10 selects a VaaNI terminal 30 that is positioned in the identified area, and determines to perform the operation using the selected VaaNI terminal 30. The application server 10 activates the selected VaaNI terminal 30 and starts the VaaNI service.

Note that, here, the base station 20 requests the start of the VaaNI service depending on the number of end users, but the base station 20 may request the start of the service according to a condition other than the condition of the number of end users.

For example, when an incoming/outgoing call rate decreases to or below a predetermined threshold, the base station 20 requests the start of the VaaNI service in the area including the base station 20. Alternatively, when congestion occurs or when admission control is performed, the base station 20 request the start of the VaaNI service in the area including the base station 20. When a guaranteed flow bit rate (GFBR) cannot be satisfied, the base station 20 requests the start of the VaaNI service in the area including the base station 20.

In addition, although the base station 20 requests the start of the service here, a device other than the base station 20 may request the start of the service. For example, the NF or AF of the core network CN may request the application server 10 to start the VaaNI service. In this case, the NF or the AF of the core network CN requests the start of the VaaNI service on the basis of information acquired from the base station 20. Alternatively, the application server 10 may directly determine the start of the VaaNI service on the basis of the information acquired from the base station 20.

In addition, the application server 10 determines the start of the VaaNI service, when the computing processing requests, the number of which is equal to or more than the number of computing processing requests set in advance are made.

The computing processing requests are a request for operating the VaaNI terminal 30 as the edge computing server. The request may include request information indicating at least one of required computing power and required latency. The application server 10 notifies the VaaNI terminal 30 of the start of the VaaNI service and the request information.

Alternatively, the request information may be directly transmitted to the VaaNI terminal 30. In this configuration, the computing processing request is transmitted to the application server 10, and the request information is transmitted to the VaaNI terminal 30.

When the VaaNI terminal 30 operates as the edge computing server, the SMF of the core network CN establishes a session (e.g., protocol data unit (PDU) session) including a connection using a local break out with an edge application server of the VaaNI terminal 30, in response to a session establishment request from the end user terminal 40. This session is, for example, a session obtained by adding a connection using the local break out with the edge application server to a session established with the DN of the core network CN corresponding to the DNN included in the session establishment request.

In the edge computing server, UPF that supports a function of UL uplink classifier (CL)/branching point (BP) and a PDU session anchor (PSA) UPF that serves as an anchor of a local break out destination are set, and are connected to the edge application server, as the above-described Local UPF. The functions of the UPF include, for example, virtualization and container, and are implemented in the edge computing server.

The SMF sets a forwarding destination for each QoS flow, to the UPF that supports the UL CL/BP function so that each QoS flow processed by the application server 10 or the edge application server is forwarded to a correct forwarding destination.

When the session establishment request from the end user terminal 40 is a session establishment request that processes a specific QoS flow, the SMF establishes a session that includes a connection to the edge application server using the local break out. An example of the specific QoS flow includes a QoS flow with a 5G QoS identifier (5QI) having a resource type of delay-critical GBR and/or a predetermined packet delay budget (PDB). In the established session, the specific QoS flow is transmitted and received between the end user terminal 40 and the edge application server.

In a session establishment request for processing the other QoS flows, the SMF may establish a session with the DN of the core network CN via the wireless backhaul link with the base station 20.

In addition, the application server 10 determines the start of the VaaNI service when the incentive more than the previously set incentive has promise. For example, the car owner sets a desired incentive in advance. The setting of the incentive may be performed by an input to the input/output unit 34 provided in the vehicle (VaaNI terminal 30). In this case, setting information (the incentive desired in advance) input to the input/output unit 34 may be provided to the application server 10 via the signal processing unit 31 or the like. The desired incentive is managed by, for example, the state management DB.

When the incentive exceeding the desired incentive has promise, the application server 10 determines the start of the VaaNI service by the VaaNI terminal 30 owned by the car owner. Note that the application server 10 calculates an assumed incentive from, for example, an assumed VaaNI service provision time.

In addition, the application server 10 determines the start of the VaaNI service when the preset backhaul quality can be satisfied. Examples of the backhaul quality include reference signal received power (RSRP) and reference signal received quality (RSRQ).

The backhaul quality changes according to, for example, a positional relationship between the VaaNI terminal 30 and the base station 20. For example, when the base station 20 is the satellite station 20A, the backhaul quality may also change according to the orbit of the satellite station 20A.

In the operation using a low earth orbiting (LEO) satellite communication and a vehicle base station (VaaNI terminal 30), the application server 10 may perform the operation using the orbit information of the satellite station 20A. For example, the application server 10 acquires the orbit information of the satellite station 20A and activates the VaaNI terminal 30 positioned under the orbit of the satellite station 20A. Alternatively, the application server 10 may notify the satellite station 20A of the movement (driving) route of the VaaNI terminal 30 to change the route of the satellite station 20A. Alternatively, the application server 10 may use a route notification to give an instruction for a satellite station having an orbit route above the vehicle base station (VaaNI terminal 30) to make a handover connection.

### (End condition)

In the service implementation process described above, the application server 10 has determined the end of the VaaNI service. Hereinafter, a description will be made of an example of a condition (end condition) that the application server 10 determines the end of the VaaNI service. For example, when at least one of the following end conditions is satisfied, the application server 10 deactivates the VaaNI terminal 30 operating as the communication infrastructure (base station).

·The connection of the end user terminal 40 cannot be confirmed for a certain period of time or longer.
·A preset service provision time has passed.
·The VaaNI terminal 30 has moved out of a preset area.
·The computing processing has not been performed for a certain period of time or longer.
·A preset backhaul quality cannot be satisfied.

When the end condition is satisfied, the application server 10 notifies the VaaNI terminal 30 of the end of the VaaNI service. Alternatively, the application server 10 may determine the end of the VaaNI service in response to a request from the VaaNI terminal 30.

### <3.1.4. Example of static/quasi-static VaaNI information>

Next, a description will be made of an example of the static/quasi-static VaaNI information. The static/quasistatic VaaNI information includes, for example, information included in the registration request and the start request. The static/quasi-static VaaNI information includes, for example, the state information. The static/quasi-static VaaNI information includes, for example, information acquired by the application server 10 to update the state management DB. The static/quasi-static VaaNI information includes, for example, at least one of the following information.

·The identification information of the car owner or the driver
·The identification information of the VaaNI terminal 30 (e.g., vehicle ID)
·Permission of the VaaNI service execution by the car owner
·A requested incentive value by the car owner (desired incentive)
·Presence or absence of registration in an infrastructure sharing service
·An amount of battery remaining in the car
·The position information of the car
·A scheduled travel route of the car
·Information about stopping (parking) the car
·Result of retrieval of a destination of the vehicle
·The communication quality of the backhaul

Note that, here, it is assumed that the application server 10 directly notifies the VaaNI terminal 30 of the start of the service, in other words, the application server 10 activates the VaaNI terminal 30. However, the destination to which the application server 10 gives notification of the start of the service is not limited to the VaaNI terminal 30.

For example, the application server 10 may notify a vehicle management company that manages the information processing device, used by the car owner, and VaaNI terminal 30, of the start of the service. In this case, the information processing device used by the car owner or the vehicle management company notifies the VaaNI terminal 30 of the start of the service.

Note that when the VaaNI terminal 30 that has received the notification of the start of the service functions as the gNB, the VaaNI terminal 30 transmits an NG setup request to an access and mobility management function (AMF) of the core network CN.

Note that, here, it is assumed that the application server 10 activates the VaaNI terminal 30 on the basis of the start condition. However, the VaaNI terminal 30 may be activated all the time, regardless of the start condition, and the application server 10 may deactivate the VaaNI terminal 30 according to the end condition.

In this configuration, when at least one of the registration request and the start request is accepted, the VaaNI terminal 30 is activated to function as the communication infrastructure (base station) or the computing resource. In other words, the VaaNI terminal 30 is activated without shifting to the standby state.

The VaaNI terminal 30 that operates as the communication infrastructure (base station) or the computing resource is deactivated according to an instruction from the application server 10, and finishes the operation as the communication infrastructure (base station) or the computing resource.

When the VaaNI terminal 30 is operating as the communication infrastructure (base station) and the computing resource, the application server 10 can deactivate the communication infrastructure (base station) or the computing resource independently. For example, the application server 10 can deactivate only the operation of the computing resource of the VaaNI terminal 30 according to the end condition to continue only the operation of the communication infrastructure (base station).

Furthermore, here, at least part of the information (the end user information, the state information, and the like) that the application server 10 acquires from the end user terminal 40 and the VaaNI terminal 30 may be acquired from, for example, the core network CN.

### <3.1.5. Modifications>

Here, it has been assumed that the application server 10 is on the operator side, and the application server 10 on the operator side determines the start of the VaaNI service. In this configuration, the application server 10 may be a node (e.g., AF node) of the core network CN, or may be a node deployed in the external network as described above.

Alternatively, the application server 10 may be a device managed by a third party different from the operator. In this case, for example, the core network CN on the operator side may select the VaaNI terminal 30 to be operated as the communication infrastructure (base station).

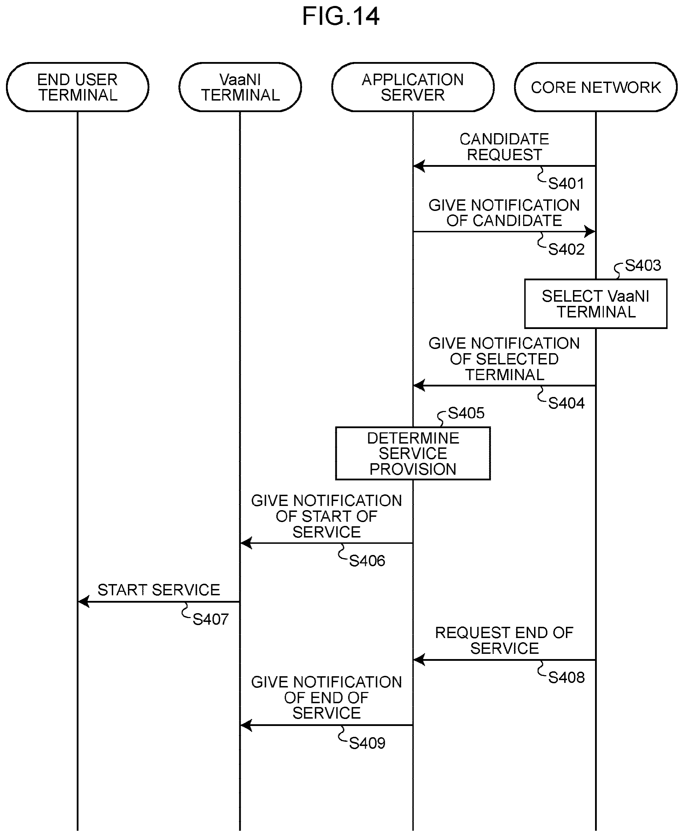

FIG. 14 is a sequence diagram illustrating another exemplary procedure of the service implementation process according to the first embodiment of the present disclosure. The service implementation process illustrated in FIG. 14 is performed between the end user terminal 40, the VaaNI terminal 30, the application server 10, and the core network CN.

First, the core network CN transmits a request (candidate request) for a candidate of the VaaNI terminal 30 to be operated as the communication infrastructure (base station), to the application server 10 (Step S401). The candidate request may include, for example, a service providing area, the service provision time, information about a computing resource requested, and the like.

The application server 10 notifies the core network CN of a VaaNI terminal 30 as the candidate (Step S402). For example, the application server 10 searches the state management DB for VaaNI terminals 30 that satisfy a condition included in the candidate request, and notifies the core network CN of the results of the search, as the candidates.

The core network CN selects a VaaNI terminal 30 to be operated as the communication infrastructure (base station), from the candidates (Step S403), and notifies the application server 10 of the selected VaaNI terminal 30 (selected terminal) (Step S404).

The application server 10 determines to provide the VaaNI service that uses the selected terminal (Step S405), and notifies the VaaNI terminal 30 of the start of the VaaNI service (Step S406). Upon receiving the notification, the VaaNI terminal 30 starts the VaaNI service for the end user terminal 40 (Step S407).

For example, when the end condition for the VaaNI service is satisfied, the core network CN requests the application server 10 to end the service (Step S408). In response to this, the application server 10 notifies the VaaNI terminal 30 of the end of the service (Step S409).

Note that although the application server 10 determines to provide (start) the VaaNI service here, the core network CN may determine to provide (start) the VaaNI service. In this configuration, the core network CN determines to start the VaaNI service using the selected terminal. The core network CN may give notification of the start of the service via the application server 10 or may directly notify the VaaNI terminal 30 of the start of the service.

### <3.2. Second Embodiment>

### <3.2.1. Overview of second embodiment>

Here, a description will be made of determination of performance of the operation of the VaaNI service by the car owner or the driver, in other words, an instruction for implementation of the VaaNI service from the VaaNI terminal 30.

Depending on where or when the VaaNI terminal 30 is operated, in other words, depending on where or when the VaaNI terminal 30 provides the VaaNI service, it is expected that the number of end user terminals 40 accommodated and the incentive that the car owner can receive will greatly change.

Meanwhile, the car owner or the driver does not know how to determine where or when to perform the operation (determine implementation of the VaaNI service).

Therefore, in the present embodiment, the VaaNI terminal 30 makes a presentation for the car owner or the driver (an example of the user) according to the information from the application server 10. This presentation is performed by the input/output unit 34 provided in (or externally mounted to) the VaaNI terminal 30. This configuration allows the car owner or the driver to determine when and where to implement the VaaNI service and the VaaNI service can be provided by using the VaaNI terminal 30.

Specifically, as described above, the VaaNI terminal 30 provides the second wireless access link (an example of the wireless access link) with the end user terminal 40 (an example of other wireless communication devices), on the basis of the wireless backhaul link (an example of the first wireless access link) with the base station 20.

The VaaNI terminal 30 includes one or a plurality of the signal processing units 31 (an example of the network interface). In addition, the VaaNI terminal 30 includes the input/output unit 34 (an example of the user interface).

The control unit 33 (an example of a processor) of the VaaNI terminal 30 transmits the registration request or the start request related to provision of the wireless access link, to the application server 10 that manages provision of the wireless access link via the signal processing unit 31.

The control unit 33 of the VaaNI terminal 30 receives a notification related to provision of the wireless access link from the application server 10, and outputs at least part of the received notification to the input/output unit 34.

This configuration enables the VaaNI terminal 30 to provide the VaaNI service on the basis of the notification from the application server 10, and the communication system S1 may deploy the communication infrastructure at low cost.

### <3.2.2. Operation execution process>

In the communication system S1, the operation execution process is performed to provide the VaaNI service. The operation execution process includes the service registration process, the service standby process, and the service implementation process.

Note that the service registration process and the service standby process are the same as those in the first embodiment, and the descriptions thereof will not be repeated.

### (Service implementation process)

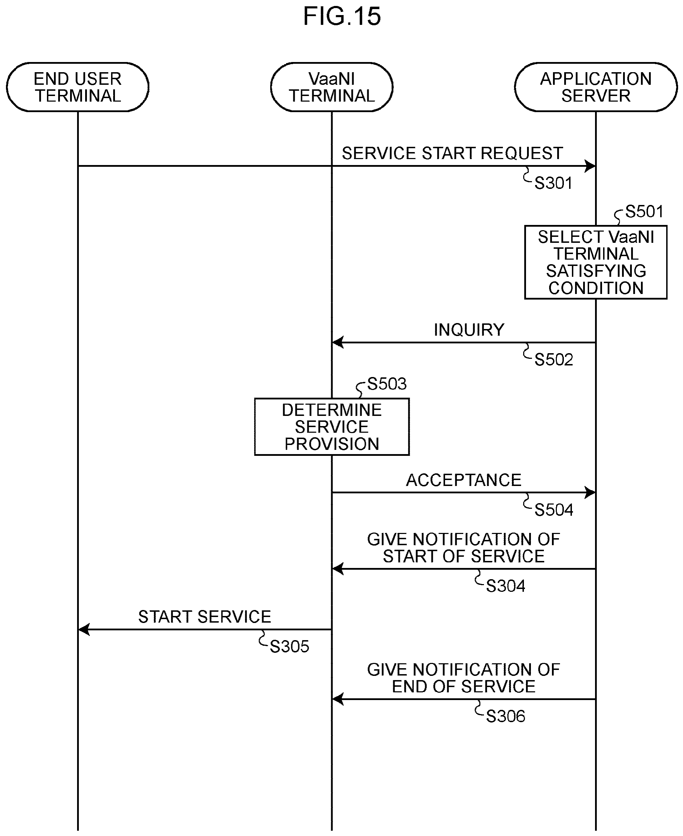

FIG. 15 is a sequence diagram illustrating an exemplary procedure of the service implementation process according to a second embodiment of the present disclosure. The service implementation process of FIG. 15 is performed between the end user terminal 40, the VaaNI terminal 30, and the application server 10. For example, the service implementation process may be performed when the VaaNI service is started. Note that process steps the same as those in the service implementation process illustrated in FIG. 13 are denoted by the same reference numerals, and description thereof will not be repeated.

The application server 10 that has received the service start request selects a VaaNI terminal 30 that satisfies the condition (Step S501). The application server 10 selects a VaaNI terminal 30, for example, according to information included in the service start request and/or the start condition.

The application server 10 makes an inquiry (recommendation notification) to the selected VaaNI terminal 30 (Step S502).

The VaaNI terminal 30 determines service provision according to an instruction from the car owner or the driver (an instruction from the car owner or the driver input to the input/output unit 34) (Step S503), and transmits an acceptance to the application server 10 (Step S504). Note that subsequent process steps are the same as those of the service implementation process in FIG. 13.

### <3.2.3. Example of recommendation notification>

As described above, the VaaNI terminal 30 determines the start of the VaaNI service according to the instruction from the car owner or the driver. At this time, the VaaNI terminal 30 outputs at least part of the information (recommendation notification) acquired from the application server 10 to the input/output unit 34, for presentation of a presentation screen to the car owner or the driver.

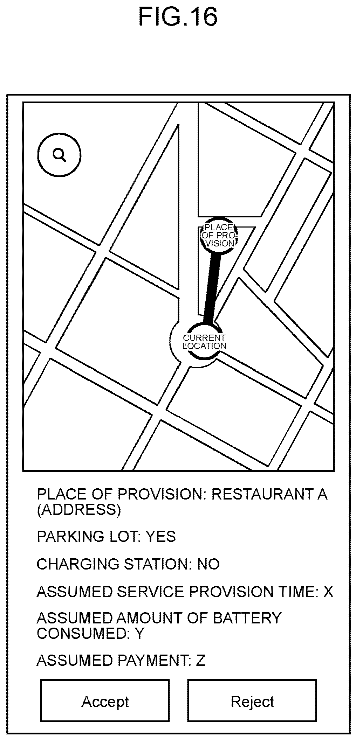

FIG. 16 is a diagram illustrating an example of the presentation screen according to the second embodiment of the present disclosure. The presentation screen illustrated in FIG. 16 is displayed on a display provided in the input/output unit 34. The presentation screen illustrated in FIG. 16 includes, for example, map information and information about the VaaNI service. The map information includes, for example, information about the current location of the VaaNI terminal 30 and the place of provision where the VaaNI service is provided.

The information about the VaaNI service includes information about the place of provision and provision information. The information about the place of provision includes, for example, at least one of detailed information (facility name, address, and the like) of the place of provision where the VaaNI service is provided, presence or absence of a parking lot, presence or absence of a charging station, and the like. The provision information includes, for example, at least one of the assumed service provision time, the assumed amount of battery consumed, an assumed payment (incentive), and the like.

In addition, the presentation screen includes buttons ("Accept" and "Reject" buttons in FIG. 16) to select whether to accept the proposal of the VaaNI service, in other words, whether to start the VaaNI service.

The VaaNI terminal 30 displays the presentation screen on the display (e.g., car navigation display) provided in the input/output unit 34 to present the recommendation notification to the car owner or the driver. Furthermore, the VaaNI terminal 30 may present the recommendation notification to the car owner or the driver by voice.

Note that the presentation screen of FIG. 16 is merely an example, and the presentation screen may include information other than the information illustrated in FIG. 16. For example, the presentation screen may include information about the VaaNI terminal 30. The information about the VaaNI terminal 30 may include, for example, an amount of battery remaining and a predicted value of battery consumption in the VaaNI terminal 30. For example, the prediction value of the battery consumption may include information indicating how the amount of battery remaining will be when the VaaNI terminal 30 operates as the communication infrastructure (base station).

Note that the information about the VaaNI terminal 30 includes not notification from the application server 10 but information acquired by the VaaNI terminal 30 itself. As described above, the information presented to the car owner or the driver may include the information acquired from the application server 10 and the information acquired from the VaaNI terminal 30. The information acquired from the VaaNI terminal 30 may include information about the state of the VaaNI terminal 30 (car) and information about the state of the function (communication device) for wireless communication of the VaaNI terminal 30.

For example, the presentation screen may include the number of the end user terminals 40 expected, an amount of computing task (processing) required, an amount of traffic required, and the like.

Furthermore, for example, the presentation screen may include a desired time slot (e.g., between 8:00 and 10:00) desired for operation as the communication infrastructure (base station).

The application server 10 may propose (recommendation) (i.e., instruct for the display provided in the input/output unit 34 to display) a parking lot that is the most effective in an area around the VaaNI terminal 30 (e.g., the number of end user terminals 40 accommodated is the largest or the incentive is the highest), to the VaaNI terminal 30.

Furthermore, the VaaNI terminal 30 may present the presentation screen to the car owner or the driver, as auxiliary information for selecting a destination. In this configuration, the VaaNI terminal 30 presents the presentation screen as part of the car navigation information, to the car owner or the driver, via the display provided in the input/output unit 34.

For example, when the car owner or the driver searches for a restaurant as the destination, the VaaNI terminal 30 may display the presentation information on the display provided in the input/output unit 34, in association with restaurant information.

As described above, operating the VaaNI terminal 30 as the communication infrastructure (e.g., base station) reduces the battery, which may affect the normal function of the VaaNI terminal 30 (e.g., driving). Therefore, the VaaNI terminal 30 is required to operate as the communication infrastructure within a range not affecting the normal function.

Therefore, for example, the lower limit of the battery is set for the VaaNI terminal 30, and when the amount of battery remaining is equal to or lower than the lower limit (or it is expected that the amount of battery remaining is equal to or lower than the lower limit), the VaaNI terminal 30 is prevented from operating as the communication infrastructure. The lower limit may be a preset fixed value or a dynamically changing value. When the lower limit dynamically changes, the VaaNI terminal 30 may predict the battery consumption on the basis of, for example, driving route information or destination information to determine the lower limit according to a result of the prediction.

When operation as the communication infrastructure may reduce the amount of battery remaining to the lower limit or less, the VaaNI terminal 30 may give attention such as displaying a warning message indicating the reduction of the amount of battery remaining, to the car owner or the driver via the display provided in the input/output unit 34.

The giving attention here is, for example, to present, to the car owner or the driver, that there is a possibility that operation as the communication infrastructure may prevent the vehicle from reaching the destination specified in advance, or battery charging may be required on the way. At this time, the VaaNI terminal 30 may present information about a candidate place for a charging station enabling battery charging at the same time as giving attention, to the car owner or the driver via the display provided in the input/output unit 34.

Note that the car owner or the driver may determine whether to start the VaaNI service in the future, in addition to or instead of whether to start the VaaNI service at the present time. In other words, the car owner or the driver may make an operation reservation for the VaaNI terminal 30, as a future communication infrastructure (base station).

For example, the application server 10 inquires of the VaaNI terminal 30 whether the VaaNI terminal 30 operates as the communication infrastructure (base station) for three to six hours from the present time. The VaaNI terminal 30 determines the operation of the communication infrastructure (base station) in the future according to an instruction from the car owner or the driver. In this way, the communication system S1 may have a reservation function for operating the VaaNI terminal 30 as the communication infrastructure (base station) for the future time. If the VaaNI terminal 30 cannot operate as the communication infrastructure (base station) at the reserved time, the VaaNI terminal 30 notifies the application server 10 that the VaaNI terminal cannot be available.

Furthermore, here, the car owner or the driver determines whether to start the VaaNI service in response to the recommendation notification. However, for example, the VaaNI terminal 30 may determine whether to start the service after setting an operation condition in advance for operating the VaaNI terminal 30 as the base station (communication infrastructure) by the car owner or the driver.

For example, the car owner or the driver determines the time slot, the amount of battery remaining, the area, or the like in advance, as the operation condition. The VaaNI terminal 30 determines whether to start the VaaNI service according to the information and the operating condition included in the inquiry from the application server 10. This operating condition may be the same as or different from the start condition described above.

In addition, the VaaNI terminal 30 presents at least part of the notification from the application server 10 to the car owner or the driver via the display provided in the input/output unit 34, but the information presented to the car owner or the driver is not limited to the notification from the application server 10. In addition to or instead of the information acquired from the application server 10, the VaaNI terminal 30 may present information about the VaaNI terminal 30 itself to the car owner or the driver via the display provided in the input/output unit 34.

In addition, the number of terminals to be selected by the application server 10 as the VaaNI terminals 30 that satisfy the condition is not limited to one. The application server 10 may select a plurality of the VaaNI terminals 30. In this case, the application server 10 may transmit a query to the plurality of the VaaNI terminals 30 having been selected. The application server 10 uses, for example, an auction method to select a VaaNI terminal 30 that actually operates as the communication infrastructure (base station), from the plurality of the VaaNI terminals 30.

Specifically, for example, the application server 10 presents a candidate place (area) where the plurality of VaaNI terminals 30 is operated as the communication infrastructure (e.g., base station) and (the upper limit of) the incentive received, to the plurality of VaaNI terminals 30. This presentation is performed by being displayed on the display provided in the input/output unit 34 by each of the VaaNI terminals 30 having received an instruction from the application server 10.

The VaaNI terminal 30 notifies the application server 10 of, for example, the area where the VaaNI terminal 30 may be operated as the communication infrastructure (base station) and a desired incentive payment. Here, the desired incentive payment may be selected from several options presented from the application server 10. Alternatively, the car owner or the driver may input the desired incentive payment by him/herself. This selection or input may be an input from the car owner or the driver through the user interface (e. g., touch screen display) provided in the input/output unit 34.

The application server 10 determines the VaaNI terminal 30 to be operated as the communication infrastructure (base station), from among the VaaNI terminals 30 from which answers about the incentive payment and the like have been returned. When answers have been returned from a plurality of the VaaNI terminals 30, the application server 10 may determine a VaaNI terminal 30 in order of arrival of the answers, or may determine the VaaNI terminal 30 in ascending order of the desired incentive payment.

When there is no response from the VaaNI terminals 30, the application server 10 may, for example, increase the incentive payment and make an inquiry to the VaaNI terminals 30 again.

Note that the application server 10 may make an inquiry about information other than the area and the incentive payment (e.g., information or the like included in the presentation screen), to a plurality of the VaaNI terminals 30. In addition, the application server 10 may determine the VaaNI terminal 30 to be operated as the communication infrastructure by using information about the car or information about the car owner or the driver, in addition to or instead of the order of answers and the order of the desired incentive payment.

### <3.2.4. Exemplary Operation>

Here, a description will be made of an exemplary operation performed when the driver actually determines to perform the operation.

First, a VaaNI provider (the car owner or the driver) registers a car operable as the communication infrastructure (base station) with the operator (application server 10) in advance, on the application layer. At this time, the VaaNI provider notifies the application server 10 of the identification information of the car (VaaNI terminal 30), performance information about the communication device installed in the car (VaaNI terminal 30), performance information about the computing power, and the like. In addition, the VaaNI provider may notify the application server 10 of information about a time slot available for the operation.

The application server 10 on the operator side monitors, for example, the communication network and identifies an area in which the VaaNI terminal 30 is desired to operate as the communication infrastructure (base station). The application server 10 transmits a request (recommendation notification) to a plurality of the VaaNI terminals 30 positioned around the identified area and operable as the communication infrastructure (base station). This request may be presented to the VaaNI provider (the car owner or the driver) via the display as the input/output unit 34 provided in (or externally mounted to) the VaaNI terminal 30. The request includes, for example, area information about an area where the operation is desired, information about a desired operation time, information about an available incentive, the number of cars desired (the number of VaaNI terminals 30), and the like.

The VaaNI terminals 30 positioned around the area (place of provision of the service) identified by the application server 10 are notified of the request from the application server 10. The VaaNI terminals 30 each display the information about the request notification of which is given, on the car navigation display (i.e., the input/output unit 34) via, for example, a car application. Furthermore, the VaaNI terminal 30 may read out the information about the request as voice information.

The driver looks at the request displayed on the display and determines to stop the car in a desired area and operate the vehicle as the communication infrastructure. The driver notifies the application server 10 of the approval (determination of the start of the service) via the VaaNI terminal 30. More specifically, the driver makes an input to the user interface (e. g., touch screen display) provided in the input/output unit 34. The application server 10 is notified of the input information via the signal processing unit 31 and the like.

Here, it is assumed that the application server 10 searches for a VaaNI terminal 30 that operates as the communication infrastructure (e.g., base station), for example, in order of arrival of answers. In addition, it is assumed that the number of VaaNI terminals 30 determined to be operated as the communication infrastructure has not reached the number of VaaNI terminals 30 specified by the application server 10 upon response of the driver's acceptance.

In this case, the driver's acceptance is accepted by the application server 10, and the VaaNI terminal 30 driven by the driver is determined as the VaaNI terminal 30 operated as the communication infrastructure (base station).

Thereafter, the driver moves the VaaNI terminal 30 to the specified area (place of provision of the service) and parks the car. After parking, the driver notifies the application server 10 that the VaaNI terminal 30 is operable as the communication infrastructure (base station). More specifically, the driver makes an input to the user interface (e. g., touch screen display) provided in the input/output unit 34. The application server 10 is notified of the input information via the signal processing unit 31 and the like. The driver may then leave the VaaNI terminal 30.

The application server 10 notifies the VaaNI terminal 30 of the start of the service. When the application server 10 receives the notification of the start of the service, the VaaNI terminal 30 connects to the backhaul link and performs configuration for operating as the communication infrastructure (base station).

The VaaNI terminal 30 starts provision of the wireless access link and provides the wireless communication and the computing power to surrounding end user terminals 40. After a specified time has passed, the VaaNI terminal 30 ends the provision of the VaaNI service, for example, according to an instruction from the application server 10.

For example, after several hours, when the driver who has left the VaaNI terminal 30 returns, the VaaNI terminal 30 notifies the driver that the operation as the communication infrastructure (base station) has been completed. At this time, the VaaNI terminal 30 may present information about the incentive received, the amount of battery consumed, and the like to the driver. For example, the driver accepts reception of the incentive and restarts driving.

### <3.2.5. Exemplary application to ride-sharing>

In the above embodiments, it has been described that the end user (e.g., pedestrian or the like) around the VaaNI terminal 30 receives the provision of the VaaNI service, but the end user riding on the VaaNI terminal 30 receives the provision of the VaaNI service. For example, in ride-sharing, the end user desires to obtain comfortable wireless communication and computing power even in a car. Here, such an end user is enabled to select the VaaNI terminal 30 that provides the VaaNI service.

For example, the application server 10 also presents the information about the VaaNI service to the end user, in selection of a vehicle that is a candidate for ride-sharing.

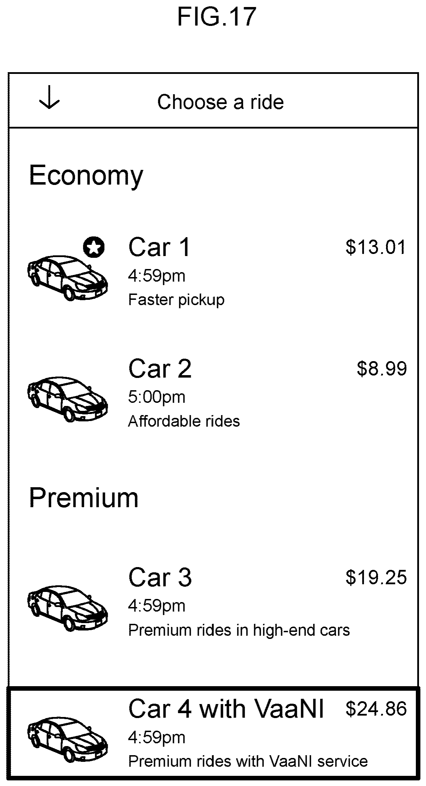

FIG. 17 is a diagram illustrating an example of a vehicle selection screen according to the second embodiment of the present disclosure. The presentation screen illustrated in FIG. 17 is displayed on the display provided in the input/output unit 34. The vehicle selection screen illustrated in FIG. 17 includes vehicle information about a plurality of vehicles (Car 1 to Car 4) to be selected.

When the VaaNI service is available, the vehicle information includes the VaaNI service being available, in addition to, for example, the arrival time and the payment of the vehicle. For example, FIG. 17 illustrates that the VaaNI service is available in Car 4.

The vehicle information may include wireless communication capability information and computing power capability information, in addition to the VaaNI service being available. For example, these pieces of capability information may be confirmed on a detailed screen of the Car 4.

Furthermore, on the vehicle selection screen, the plurality of vehicles to be selected may be filtered according to whether the VaaNI service is available, capability, and the like.

Furthermore, while a recommendation notification is transmitted to the VaaNI terminal 30 that performs ride-sharing, and the recommendation notification in this case includes information about a ride-sharing service provision route (e.g., end user's destination), instead of the place of provision of the service. At least one of these pieces of information may be displayed on the display provided in the input/output unit 34.

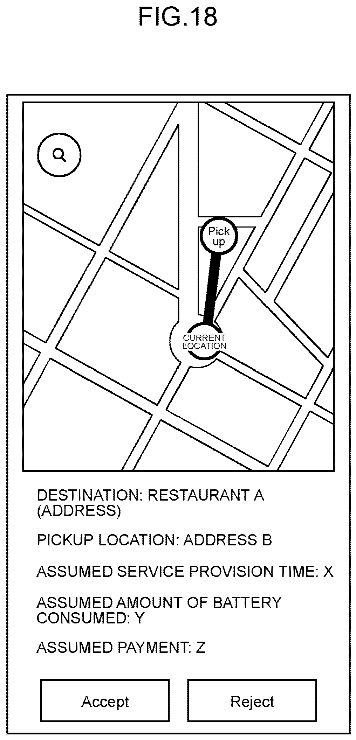

FIG. 18 is a diagram illustrating another example of the presentation screen according to the second embodiment of the present disclosure. The presentation screen illustrated in FIG. 18 is displayed on the display provided in the input/output unit 34. FIG. 18 illustrates, for example, the map information and the information about the VaaNI service. The map information includes, for example, information about the current location of the VaaNI terminal 30 and a pick up location where the end user is picked up.

The information about the VaaNI service includes, for example, information about a destination of the end user (facility name, address, and the like), a pickup location for the end user, the assumed service provision time, an assumed amount of battery consumed, an assumed payment (incentive), and the like.

In addition, the presentation screen includes buttons ("Accept" and "Reject" buttons in FIG. 18) to select whether to accept the proposal of the ride-sharing service and the VaaNI service.

The VaaNI terminal 30 displays the presentation screen on the display (e.g., car navigation display) as the input/output unit 34 to present the recommendation notification to the car owner or the driver. Furthermore, the VaaNI terminal 30 may present the recommendation notification to the car owner or the driver by voice (voice output from a speaker as the input/output unit 34).

Note that the presentation screen of FIG. 18 is merely an example, and the presentation screen may include information other than the information illustrated in FIG. 18. For example, the presentation screen may include an amount of computing task (processing) required, an amount of traffic required, and the like.

Furthermore, although an example of application of the communication system S1 to the ride-sharing service has been described here, the communication system S1 may be applied to a service other than ride-sharing. For example, the communication system S1 may be applied to a ride-hailing service, a rental car service, or the like.

### <3.3. Third Embodiment>

### <3.3.1. Overview of third embodiment>

Here, a description will be made of determination of performance of the operation of the VaaNI service by the end user, in other words, an instruction for implementation of the VaaNI service from the end user terminal 40.

When the end user terminal 40 gives an instruction to implement the VaaNI service, there is a possibility that there is no car owner or driver in the VaaNI terminal 30 at the timing of instruction for implementation. In other words, the timing at which the car owner or the driver arrives at the destination (place of provision of the service) does not always match the timing at which the end user desires to use the VaaNI service.

For example, it is assumed that the car owner or the driver parks the car (VaaNI terminal 30) in a parking lot and uses a facility positioned next to the parking lot. It is assumed that the VaaNI service is needed by the end user around the VaaNI terminal 30 parked in the parking lot, while the car owner or the driver uses the facility. However, at the time of needing the VaaNI service, the car owner or the driver is not at the VaaNI terminal 30. Even in such a case, a mechanism that enables the end user terminal 40 to receive the VaaNI service is demanded.

Therefore, in the present embodiment, the end user terminal 40 requests the VaaNI terminal 30 to provide the VaaNI service on the basis of the provision information about the provision of the VaaNI service. Therefore, the VaaNI terminal 30 starts to provide the VaaNI service to the end user terminal 40. Note that the provision information is, for example, a discovery signal transmitted to the surroundings by the VaaNI terminal 30.

Specifically, as described above, the VaaNI terminal 30 provides the second wireless access link (an example of the wireless access link) with the end user terminal 40 (an example of other wireless communication devices), on the basis of the wireless backhaul link (an example of the first wireless access link) with the base station 20.

The VaaNI terminal 30 includes one or a plurality of the signal processing units 31 (an example of the network interface). In addition, the VaaNI terminal 30 includes the input/output unit 34 (an example of the user interface).

The control unit 33 (an example of a processor) of the VaaNI terminal 30 transmits the registration request or the start request related to provision of the wireless access link, to the application server 10 that manages provision of the wireless access link via the signal processing unit 31.

The control unit 33 of the VaaNI terminal 30 starts provision of the wireless access link in response to the request from the end user terminal 40.

For example, the control unit 33 transmits the discovery signal related to the provision of the wireless access link to the surroundings. The end user terminal 40 requests the provision of the wireless access link in response to the discovery signal.

Here, the VaaNI terminal 30 or the application server 10 may confirm permission of the request for provision of the VaaNI service from the end user terminal 40, with the car owner or the driver. For example, when the request for provision of the VaaNI service is received from the end user terminal 40, the VaaNI terminal 30 or the application server 10 gives notification to the wireless communication device (e.g., smartphone) owned by the car owner or the driver, for requesting permission for the request. It is assumed that the wireless communication device is, for example, registered in advance.

For example, upon confirmation of the notification from the VaaNI terminal 30 or the application server 10 displayed on the input/output unit of the wireless communication device owned by the car owner or the driver, the car owner or the driver determines approval or denial to the request for provision of the VaaNI service via the input/output unit.

This configuration enables the VaaNI terminal 30 to provide the VaaNI service on the basis of the notification from the application server 10, and the communication system S1 may deploy the communication infrastructure at low cost.

### <3.3.2. Operation execution process>

In the communication system S1, the operation execution process is performed to provide the VaaNI service. The operation execution process includes the service registration process, the service standby process, and the service implementation process.

Note that the service registration process and the service standby process are the same as those in the first embodiment, and the descriptions thereof will not be repeated.

### (Service implementation process)

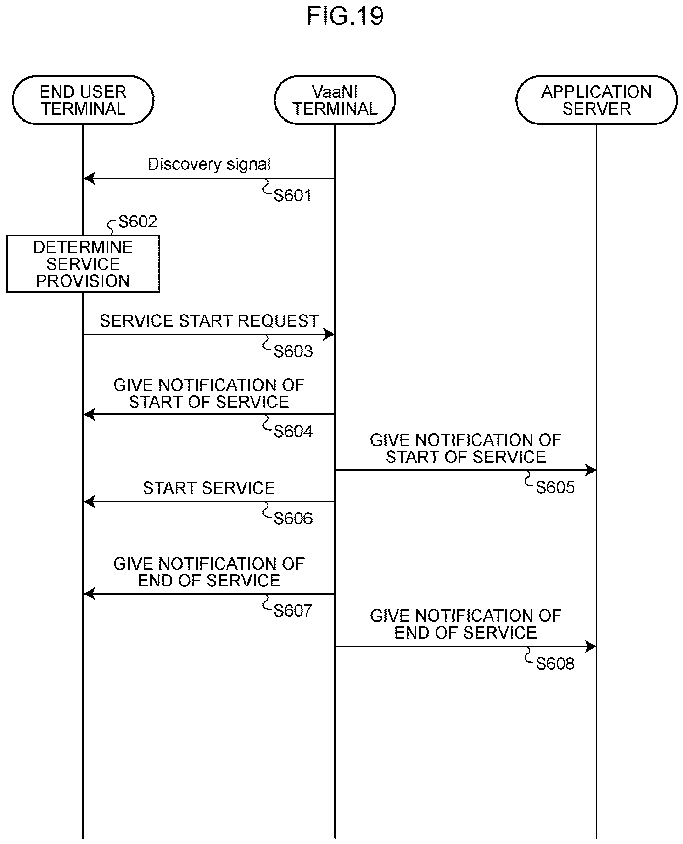

FIG. 19 is a sequence diagram illustrating an exemplary procedure of the service implementation process according to a third embodiment of the present disclosure. The service implementation process of FIG. 19 is performed between the end user terminal 40, the VaaNI terminal 30, and the application server 10. For example, the service implementation process may be performed when the VaaNI service is started.

As illustrated in FIG. 19, the VaaNI terminal 30 transmits the discovery signal to the surroundings (the end user terminal 40) (Step S601). The discovery signal may include, for example, the identification information of the VaaNI terminal 30, the assumed service provision time, information about available communication quality, information about available computing power, and the like.

The end user terminal 40 that has received the discovery signal determines to provide the VaaNI service (Step S602). For example, the end user terminal 40 determines to start the VaaNI service when the provision of the VaaNI service is desired.

The end user terminal 40 transmits the service start request to the VaaNI terminal 30 (Step S603). Therefore, the end user terminal 40 activates a function of operating as the base station (communication infrastructure) of the VaaNI terminal 30.

The VaaNI terminal 30 notifies the end user terminal 40 of the start of the service (Step S604). In addition, the VaaNI terminal 30 notifies the application server 10 of the start of the service (Step S605).

The VaaNI terminal 30 starts the VaaNI service, for the end user terminal 40 (Step S606).

The VaaNI terminal 30 notifies the end user terminal 40 of the end of the service, on the basis of the passage of the service provision time or the like (Step S607). The VaaNI terminal 30 notifies the application server 10 of the end of the service (Step S608).

It should be noted that here, the VaaNI terminal 30 gives notification of the end of the service, in other words, the VaaNI terminal 30 determines the end of the service, but the determination of the end of the service may be performed by a device other than the VaaNI terminal 30. For example, the end user terminal 40 may determine the end of the service, or the application server 10 may determine the end of the service.

In addition, the VaaNI terminal 30 may end the VaaNI service, when there is no connection from the end user terminal 40 (no use of the wireless access link) for a certain period of time. In this case, the VaaNI terminal 30 may not notify the end user terminal 40 of the end of the service.

The VaaNI terminal 30 notifies the application server 10 of the start and end of the service, and therefore, the application server 10 can know the provision of the VaaNI service. Accordingly, the application server 10 can pay the incentive to the car owner or the driver.

In addition, here, the VaaNI terminal 30 transmits the discovery signal as the provision information, but the provision information is not limited thereto. For example, the application server 10 may transmit the provision information to the end user terminal 40.

In this configuration, the application server 10 may notify the end user terminal 40 of information about the VaaNI terminal 30 capable of providing the VaaNI service, as the provision information. The provision information may include, for example, the identification information of the VaaNI terminal 30, the service provision area, the assumed service provision time, information about available communication quality, information about available computing power, and the like.

### <<4. Other embodiments>>

The embodiments described above are merely examples, and various modifications and applications are possible. For example, some or all of the several embodiments described above may be implemented in combination with some or all of other embodiments.

A control device that controls the application server 10, the base station 20, the VaaNI terminal 30, or the end user terminal 40 of the present embodiment may be implemented by a dedicated computer system or a general-purpose computer system.

For example, communication programs for implementing the operations described above are stored in a computer-readable recording medium such as an optical disk, semiconductor memory, magnetic tape, or flexible disk, for distribution. Then, for example, the programs are installed on a computer to perform the processes described above, and thereby the control device is configured. At this time, the control device may be a device (e.g., a personal computer) outside the application server 10, the base station 20, the VaaNI terminal 30, or the end user terminal 40. Furthermore, the control device may be a device (e.g., the control unit 13, the control unit 24, the control unit 33, or the control unit 43) inside the application server 10, the base station 20, the VaaNI terminal 30, or the end user terminal 40.

Furthermore, each of the communication programs may be stored in a disk device included in a server device on a network such as the Internet, for example, so as to be downloaded to the computer. Furthermore, the functions described above may be implemented by cooperation between an operating system (OS) and application software. In this configuration, a portion other than the OS may be stored in a medium for distribution, or the portion other than the OS may be stored in the server device, for example, for being downloaded to the computer.

Furthermore, of the processes described in the above embodiments, all or some of the processes described to be performed automatically may be performed manually, or all or some of processes described to be performed manually may be performed automatically by a known method. In addition, the process procedures, specific names, and information including various data and parameters, which are described in the above description or illustrated in the drawings, can be appropriately changed unless otherwise specified. For example, various information illustrated in the drawings are not limited to the illustrated information.

Furthermore, the component elements of the devices are illustrated as functional concepts but are not necessarily required to be physically configured as illustrated. In other words, specific forms of distribution or integration of the devices are not limited to those illustrated, and all or some of the devices may be configured by being functionally or physically distributed or integrated in appropriate units, according to various loads or usage conditions. Note that the configuration obtained by the distribution or integration may be formed dynamically.

Furthermore, the embodiments described above can be appropriately combined within a range consistent with the contents of the processing. Furthermore, the orders of the steps illustrated in the sequence diagrams of the embodiments described above can be changed appropriately.

Furthermore, for example, the present embodiment can be implemented as all configurations constituting the devices or systems, such as a processor as a system large scale integration (LSI) or the like, a module using a plurality of the processors or the like, a unit using a plurality of the modules or the like, and a set (i.e., a configuration of part of the device) obtained by further adding other functions to the unit.

Note that, in the present embodiment, the system means an aggregation of a plurality of component elements (devices, modules (components), and the like), and it does not matter whether all the component elements are in the same housing. Therefore, a plurality of devices housed in separate housings and connected via a network, and one device including a plurality of modules housed in one housing are both systems.

Furthermore, for example, the present embodiment can adopt a configuration of cloud computing in which one function is shared between the plurality of devices via a network to perform processing by the plurality of devices in cooperation.

### <<5. Conclusion>>

Although the embodiments of the present disclosure have been described above, the technical scope of the present disclosure is not limited to the embodiments described above and various alterations can be made without departing from the spirit and scope of the present disclosure. Moreover, the component elements of different embodiments and modifications may be suitably combined with each other.

Furthermore, the effects in the embodiments described herein are merely examples, the present disclosure is not limited to these effects, and other effects may also be provided.

Note that the present technology can also have the following configurations.
(1) A wireless communication device, the wireless communication device providing a second wireless access link with another wireless communication device based on a first wireless access link with a base station, the wireless communication device comprising:
   one or a plurality of network interfaces;
   a user interface of the wireless communication device, provided for a user; and
   a processor that transmits a registration request or a start request related to provision of the second wireless access link, to a server device managing the provision of the second wireless access link, via the one or a plurality of network interfaces,
   receives a notification about the provision of the second wireless access link from the server device, and
   outputs at least part of the notification, to the user interface.
(2) The wireless communication device according to (1), wherein the processor receives the notification from the server device, when the provision of the second wireless access link is requested from the another wireless communication device.
(3) The wireless communication device according to (1) or (2), wherein the registration request or the start request includes at least one of identification information for identification of the wireless communication device or the user and capability information about a capability of the wireless communication device.
(4) The wireless communication device according to any one of (1) to (3), wherein the notification includes at least one of information about a place of provision related to a place of provision of the second wireless access link, incentive information about an incentive obtained by the user through the provision of the second wireless access link, and provision information about the provision of the second wireless access link.
(5) The wireless communication device according to (4), wherein the information about a place of provision includes at least one of position information of the place of provision, parking lot information indicating whether there is a parking lot at the place of provision, and charging information indicating whether the wireless communication device is enabled to be charged at the place of provision.
(6) The wireless communication device according to (4) or (5), wherein the provision information includes at least one of time information about a time in which the second wireless access link may be provided, power information about power that may be consumed through the provision of the second wireless access link, and utilization information about utilization of a computation resource that may be used through the provision of the second wireless access link.
(7) The wireless communication device according to any one of (1) to (6), wherein the processor outputs, to the user interface, at least one of first state information about a state of the wireless communication device and second state information about a state of a device on which the wireless communication device is mounted.
(8) The wireless communication device according to (7), wherein the processor outputs at least part of the notification and at least one of the first state information and the second state information, to the user interface.
(9) The wireless communication device according to any one of (1) to (8), wherein the processor outputs to the user interface at least part of the notification, and map information.
(10) The wireless communication device according to any one of (1) to (9), wherein the processor transmits movement information about movement of the wireless communication device, to the server device.
(11) The wireless communication device according to (10), wherein the movement information includes at least one of route information about a movement route of the wireless communication device, and search information about search for a movement destination.
(12) The wireless communication device according to any one of (1) to (11), wherein the processor starts the provision of the second wireless access link according to an instruction from the user.
(13) The wireless communication device according to any one of (1) to (11), wherein
   the processor
   transmits, according to an instruction from the user, an acceptance notification of the provision of the second wireless access link to the server device, and
   starts the provision of the second wireless access link, when a start notification of the provision is received from the server device.
(14) The wireless communication device according to any one of (1) to (13), wherein the wireless communication device is mounted on a vehicle.
(15) A communication method, the communication method of a wireless communication device providing a second wireless access link with another wireless communication device based on a first wireless access link with a base station, the method comprising:
   transmitting a registration request or a start request related to provision of the second wireless access link, to a server device managing the provision of the second wireless access link, via one or a plurality of network interfaces of the wireless communication device;
   receiving a notification about the provision of the second wireless access link from the server device; and
   outputting at least part of the notification, to a user interface of the wireless communication device, the user interface being provided for a user.
(16) An information processing device, the information processing device managing a second wireless access link provided between a first wireless communication device and a second wireless communication device, based on a first wireless access link with a base station, the information processing device comprising:
   one or a plurality of network interfaces; and
   a processor that receives a registration request or a start request related to provision of the second wireless access link, from the first wireless communication device, via the one or a plurality of network interfaces, and
   transmits a notification about the provision of the second wireless access link, to the first wireless communication device,
   wherein the notification is output to a user interface of the first wireless communication device, provided for a user.
(17) The information processing device according to (16), wherein the processor causes a database to store device information about the first wireless communication device having transmitted the registration request or the start request.
(18) The information processing device according to (17), in which the device information includes at least one of identification information for identification of the first wireless communication device or the user, position information about a position of the first wireless communication device, capability information about a capability of the first wireless communication device, and a state information about a state of the first wireless communication device.
(19) The information processing device according to (17) or (18), in which the processor updates the device information according to at least one of a predetermined cycle and movement of the first wireless communication device.
(20) The information processing device according to any of (16) to (19), in which the processor receives a request for the provision of the second wireless access link, from the second wireless communication device.
(21) The information processing device according to (20), in which the processor transmits the notification to the first wireless communication device when receiving the request.
(22) A communication method,
   the communication method of an information processing device managing a second wireless access link provided between a first wireless communication device and a second wireless communication device, based on a first wireless access link with a base station, the method comprising:
   receiving a registration request or a start request related to provision of the second wireless access link, from the first wireless communication device, via one or a plurality of network interfaces of the information processing device, and
   transmitting a notification about the provision of the second wireless access link, to the first wireless communication device,
   wherein the notification is output to a user interface of the first wireless communication device, provided for a user.
(23) A wireless communication device, the wireless communication device providing a second wireless access link with another wireless communication device based on a first wireless access link with a base station, the wireless communication device including:
   one or a plurality of network interfaces;
   a user interface of the wireless communication device, provided for a user; and
   a processor that transmits a registration request or a start request related to provision of the second wireless access link, to a server device managing the provision of the second wireless access link, via the one or a plurality of network interfaces, and
   starts the provision of the second wireless access link according to an instruction from the server device.
(24) An information processing device, the information processing device managing a second wireless access link provided between a first wireless communication device and a second wireless communication device, based on a first wireless access link with a base station, the information processing device including:
   one or a plurality of network interfaces; and
   a processor that receives a registration request or a start request related to provision of the second wireless access link, from the first wireless communication device, via the one or a plurality of network interfaces, and
   instructs the first wireless communication device to start the provision of the second wireless access link.
(25) A wireless communication device, the wireless communication device providing a second wireless access link with another wireless communication device based on a first wireless access link with a base station, the wireless communication device including:
   one or a plurality of network interfaces;
   a user interface of the wireless communication device, provided for a user; and
   a processor that transmits a registration request or a start request related to provision of the second wireless access link, to a server device managing the provision of the second wireless access link, via the one or a plurality of network interfaces, and
   starts the provision of the second wireless access link in response to a request from the another wireless communication device.
(26) The wireless communication device according to (25), in which the processor transmits provision information about the provision of the second wireless access link to surroundings.
(27) A wireless communication device,
   the wireless communication device receiving provision of a second wireless access link from another wireless communication device providing the second wireless access link based on a first wireless access link with a base station, the wireless communication device including
   a processor that receives provision information about the provision of the second wireless access link by the another wireless communication device having transmitted a registration request or a start request related to the provision of the second wireless access link to a server device managing the provision of the second wireless access link, and
   receives the provision of the second wireless access link by making a request to the another wireless communication device.

### Reference Signs List

S1 COMMUNICATION SYSTEM
10 APPLICATION SERVER
11 COMMUNICATION UNIT
12, 22, 32, 42 STORAGE UNIT
13, 24, 33, 43 CONTROL UNIT
20 BASE STATION
21, 31, 41 SIGNAL PROCESSING UNIT
23 NETWORK COMMUNICATION UNIT
30 VaaNI TERMINAL
34 INPUT/OUTPUT UNIT
40 END USER TERMINAL

## Claims

1. A wireless communication device, the wireless communication device providing a second wireless access link with another wireless communication device based on a first wireless access link with a base station, the wireless communication device comprising:
one or a plurality of network interfaces;
a user interface of the wireless communication device, provided for a user; and
a processor that transmits a registration request or a start request related to provision of the second wireless access link, to a server device managing the provision of the second wireless access link, via the one or a plurality of network interfaces,
receives a notification about the provision of the second wireless access link from the server device, and
outputs at least part of the notification, to the user interface.

2. The wireless communication device according to claim 1, wherein the processor receives the notification from the server device, when the provision of the second wireless access link is requested from the another wireless communication device.

3. The wireless communication device according to claim 1, wherein the registration request or the start request includes at least one of identification information for identification of the wireless communication device or the user and capability information about a capability of the wireless communication device.

4. The wireless communication device according to claim 1, wherein the notification includes at least one of information about a place of provision related to a place of provision of the second wireless access link, incentive information about an incentive obtained by the user through the provision of the second wireless access link, and provision information about the provision of the second wireless access link.

5. The wireless communication device according to claim 4, wherein the information about a place of provision includes at least one of position information of the place of provision, parking lot information indicating whether there is a parking lot at the place of provision, and charging information indicating whether the wireless communication device is enabled to be charged at the place of provision.

6. The wireless communication device according to claim 4, wherein the provision information includes at least one of time information about a time in which the second wireless access link may be provided, power information about power that may be consumed through the provision of the second wireless access link, and utilization information about utilization of a computation resource that may be used through the provision of the second wireless access link.

7. The wireless communication device according to claim 1, wherein the processor outputs, to the user interface, at least one of first state information about a state of the wireless communication device and second state information about a state of a device on which the wireless communication device is mounted.

8. The wireless communication device according to claim 7, wherein the processor outputs at least part of the notification and at least one of the first state information and the second state information, to the user interface.

9. The wireless communication device according to claim 1, wherein the processor outputs to the user interface at least part of the notification, and map information.

10. The wireless communication device according to claim 1, wherein the processor transmits movement information about movement of the wireless communication device, to the server device.

11. The wireless communication device according to claim 10, wherein the movement information includes at least one of route information about a movement route of the wireless communication device, and search information about search for a movement destination.

12. The wireless communication device according to claim 1, wherein the processor starts the provision of the second wireless access link according to an instruction from the user.

13. The wireless communication device according to claim 1, wherein
the processor
transmits, according to an instruction from the user, an acceptance notification of the provision of the second wireless access link to the server device, and
starts the provision of the second wireless access link, when a start notification of the provision is received from the server device.

14. The wireless communication device according to claim 1, wherein the wireless communication device is mounted on a vehicle.

15. A communication method, the communication method of a wireless communication device providing a second wireless access link with another wireless communication device based on a first wireless access link with a base station, the method comprising:
transmitting a registration request or a start request related to provision of the second wireless access link, to a server device managing the provision of the second wireless access link, via one or a plurality of network interfaces of the wireless communication device;
receiving a notification about the provision of the second wireless access link from the server device; and
outputting at least part of the notification, to a user interface of the wireless communication device, the user interface being provided for a user.

16. An information processing device, the information processing device managing a second wireless access link provided between a first wireless communication device and a second wireless communication device, based on a first wireless access link with a base station, the information processing device comprising:
one or a plurality of network interfaces; and
a processor that receives a registration request or a start request related to provision of the second wireless access link, from the first wireless communication device, via the one or a plurality of network interfaces, and
transmits a notification about the provision of the second wireless access link, to the first wireless communication device,
wherein the notification is output to a user interface of the first wireless communication device, provided for a user.

17. The information processing device according to claim 16, wherein the processor causes a database to store device information about the first wireless communication device having transmitted the registration request or the start request.

18. A communication method,
the communication method of an information processing device managing a second wireless access link provided between a first wireless communication device and a second wireless communication device, based on a first wireless access link with a base station, the method comprising:
receiving a registration request or a start request related to provision of the second wireless access link, from the first wireless communication device, via one or a plurality of network interfaces of the information processing device, and
transmitting a notification about the provision of the second wireless access link, to the first wireless communication device,
wherein the notification is output to a user interface of the first wireless communication device, provided for a user.
